# FASCICULE DE BREVET EUROPEEN

(11) **EP 1 885 786 B1**
(45) Date de publication et mention de la délivrance du brevet: **11.03.2009**
(21) Numéro de dépôt: 06755498.0
(22) Date de dépôt: 18.05.2006
(51) Int. Cl.: C08K 5/48, C08L 51/10, A43B 13/04

(54) **UTILISATION D'UNE COMBINAISON DE DEUX TYPES D'AGENTS DE COUPLAGE DIFFERENTS COMME SYSTEME DE COUPLAGE (CHARGE BLANCHE - ELASTOMERE) DANS LES COMPOSITIONS DE CAOUTCHOUC COMPRENANT UNE CHARGE INORGANIQUE**
VERWENDUNG EINER KOMBINATION VON ZWEI UNTERSCHIEDLICHEN ARTEN VON HAFTVERMITTLERN ALS HAFTVERMITTLUNGSSYSTEM (WEISSER FÜLLSTOFF-ELASTOMER) IN ANORGANISCHEN FÜLLSTOFF ENTHALTENDEN KAUTSCHUKZUSAMMENSETZUNGEN
USE OF A COMBINATION OF TWO TYPES OF DIFFERENT COUPLING AGENTS AS COUPLING SYSTEM (WHITE FILLER-ELASTOMER) IN RUBBER COMPOSITIONS COMPRISING AN INORGANIC FILLER

(30) Priorité: 26.05.2005 FR 0505286
(43) Date de publication de la demande: 13.02.2008
(73) Titulaire: RHODIA CHIMIE, 93300 Aubervilliers (FR)
(72) Inventeur: GUY, Laurent, 69140 RILLIEUX La PAPE (FR); FERNANDEZ, Michel, F-69009 Lyon (FR); STERIN, Sébastien, F-69450 Saint Cyr Au Mont D'or (FR)
(74) Mandataire: Delenne, Marc
(86) Numéro de dépôt international: PCT/FR2006/001120
(87) Numéro de publication internationale: WO 2006/125891

(56) Documents cités:
- FR-A- 2 340 323
- FR-A- 2 839 720
- US-A1- 2003 114 601

## Description

Le domaine de la présente invention est celui de l'utilisation d'une combinaison de deux types d'agents de couplage bien différents, comme système de couplage (charge blanche - élastomère) dans les compositions de caoutchouc comprenant une charge inorganique à titre de charge renforçante. L'invention concerne également les compositions d'élastomère(s) obtenues grâce à l'emploi dudit système de couplage, ainsi que les articles en élastomère(s) possédant un corps comprenant les compositions précitées.

Les types d'articles en élastomère(s) où l'invention est la plus utile sont ceux sujets notamment aux contraintes suivantes : des variations de températures et/ou des variations de sollicitation de fréquence importante en régime dynamique ; et/ou une contrainte statique importante ; et/ou une fatigue en flexion importante en régime dynamique. De tels types d'articles sont par exemple : des joints d'appareils électroménagers, des supports jouant le rôle d'extracteurs de vibrations de moteurs soit avec des armatures métalliques, soit avec un fluide hydraulique à l'intérieur de l'élastomère, des gaines de câbles, des semelles de chaussures et des galets pour téléphériques.

Ceci a été rendu possible notamment grâce à la mise au point de nouvelles compositions d'élastomères renforcées de charges inorganiques spécifiques qualifiées de "renforçantes", présentant une haute dispersibilité, capables de rivaliser avec le noir de carbone conventionnel du point de vue renforçant, et offrant en outre à ces compositions une hystérèse plus basse synonyme notamment d'une diminution de l'échauffement interne des articles en élastomère(s) (tels que par exemple ceux précités) lors de leur utilisation, en service.

La mise en oeuvre (ou "processabilité") des compositions de caoutchouc contenant de telles charges reste néanmoins plus difficile que pour les compositions de caoutchouc chargées conventionnellement de noir de carbone. En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique - élastomère), on rappelle ici que doit être entendu, de manière connue, un agent apte à établir une connexion suffisante, de nature chimique et/ou physique, entre la charge inorganique et l'élastomère.

Un tel agent de couplage, au moins bifonctionnel, a comme formule générale simplifiée « Y-W-X », dans laquelle :
- Y représente un groupe fonctionnel (fonction "Y") capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère, par exemple par l'intermédiaire d'un atome ou d'un groupe d'atomes appropriés ;
- W représente un groupe divalent permettant de relier "Y" et "X".

Les agents de couplage ne doivent en particulier pas être confondus avec de simples agents de recouvrement de la charge inorganique qui, de manière connue, peuvent comporter la fonction "Y" active vis-à-vis de la charge inorganique mais sont en tout cas dépourvus de la fonction "X" active vis-à-vis de l'élastomère.

Des agents de couplage, notamment (silice - élastomère), ont été décrits dans un grand nombre de documents brevets, les plus connus étant des silanes sulfurés bifonctionnels, en particulier des alkoxysilanes sulfurés, considérés aujourd'hui comme les produits apportant, pour des vulcanisats chargés à la silice, le meilleur compromis en terme de sécurité au grillage, de facilité de mise en oeuvre et de pouvoir renforçant. Parmi ces silanes sulfurés, doit être cité tout particulièrement le tétrasulfure de bis 3-triéthoxysilylpropyle (en abrégé TESPT), agent de couplage de référence dans les compositions de caoutchouc comprenant une charge inorganique à titre de charge renforçante.

On cherche toujours aujourd'hui à améliorer les performances de ces agents de couplage pour une charge inorganique telle que par exemple la silice.

En particulier, le besoin est particulièrement présent dans le cas de matrices de caoutchouc à base d'un élastomère isoprénique dans lesquelles, de manière connue, une liaison efficace avec l'élastomère est beaucoup plus difficile à obtenir, comparativement à l'emploi de noir de carbone.

Poursuivant ses recherches, le Demandeur a découvert un nouveau système de couplage pour charge inorganique qui, grâce à la combinaison de deux types d'agents de couplage bien différents, permet d'améliorer de manière très sensible les performances de couplage sur un élastomère isoprénique. Un tel système permet notamment d'améliorer notablement les propriétés d'hystérèse des compositions de caoutchouc, ce qui se concrétisent pour les articles en élastomère(s) (tels que par exemple ceux précités) par une diminution de l'échauffement interne de ces articles lors de leur utilisation, en service ou par une augmentation du facteur de transmissibilité dans le cas des pièces antivibratoires dans les supports de moteurs.

### PREMIER OBJET DE L'INVENTION

Cet objectif, parmi d'autres, est atteint par la présente invention qui concerne, dans un premier objet, l'utilisation :
→ d'une quantité efficace d'un système polyfonctionnel (A) de couplage (charge inorganique-élastomère), porteur d'au moins deux fonctions notées "X" ou "Y", greffable d'une part sur l'élastomère au moyen de la fonction "X" et d'autre part sur la charge inorganique au moyen de la fonction "Y" ;
→ comme agent de couplage charge inorganique - élastomère dans les compositions de caoutchouc comprenant :
   ◆ (B) au moins un élastomère de type caoutchouc, naturel ou synthétique ;
   ◆ (C) une charge inorganique à titre de charge renforçante ;
   ◆ (D) tout ou partie des autres constituants ou additifs choisis parmi : un (ou des) agent(s) de vulcanisation (D1), éventuellement un (ou des) accélérateur(s) de vulcanisation (D2), éventuellement un (ou des) activateur(s) de vulcanisation (D3), éventuellement une (où des) charge(s) renforçante(s) non-blanche(s) (D4), éventuellement une (ou des) charge(s) inorganique(s) peu ou non renforçante(s) (D5), éventuellement un (ou des) agent(s) protecteur(s) (D6), éventuellement un (ou des) agent(s) de plastification et/ou un (ou des) agent(s) d'aide à la mise en oeuvre (D7), et des mélanges de ces espèces ;
→ ladite utilisation étant caractérisée en ce que :
   + le système polyfonctionnel de couplage (A) consiste dans une association particulière résidant dans la combinaison des ingrédients (A1) et (A2) suivants :
      ◆ (A1) étant au moins un agent de couplage choisi parmi le groupe des agents de couplage dont chaque membre est un composé constitué essentiellement d'un composé organosilicique fonctionnalisé (I) comprenant les motifs de formules générales suivantes :

         [(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)
   dans lesquelles :
   - m, n, o, p représentent chacun un nombre entier ou fractionnaire égal ou supérieur à 0;
   - q représente un nombre entier ou fractionnaire égal ou supérieur à 1 ;
   - a représente un nombre entier choisi parmi 0,1, 2 et 3 ;
   - a' représente un nombre entier choisi parmi 0, 1 et 2 ;
   - la somme a + a' se situe dans l'intervalle allant de 0 à 3 avec les conditions selon lesquelles : quand a = 0, alors au moins un des symboles G⁰ répond à la définition donnée ci-après pour G² ; et quand a + a' = 3, alors m = n = o = p = 0 (zéro) ;
   - les symboles G⁰, identiques ou différents, représentent chacun l'un des groupes correspondant à G² ou G¹ ;
   - les symboles G², identiques ou différents, représentent chacun : un groupe hydroxyle ou un groupe monovalent hydrolysable ;
   - les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ; avec la possibilité complémentaire selon laquelle, le cas échéant, un groupe G¹ peut former avec un groupe G² et l'atome de silicium auquel G¹ et G² sont liés, un groupe carbocyclique monocyclique ou polycyclique ayant de 2 à 10 atomes de carbone cyclique et pouvant comporter un ou plusieurs hétéroatome(s) cyclique(s) oxygéné(s) ;
   - le symbole Z représente un radical divalent choisi parmi : un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupe monovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
   - le symbole A représente :
      + un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
      + un groupe -X-G³ où : X représente -O-, -S- ou -NG⁴- avec G⁴ prenant l'une quelconque des significations données ci-avant pour G¹ ; G³, identique ou différent de G⁴, représente l'un quelconque des groupes définis pour G¹ ; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
      + ou, lorsque q = 1, un groupe [-Z-SiO_{(3-a-a')/2}(G²)ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ dans lequel les symboles Z, G⁰, G¹, G², a, a', m, n, o, et p possèdent les définitions indiquées ci-avant ;
◆ (A2) étant au moins un agent de couplage choisi dans le groupe des agents de couplage dont chaque membre est un composé constitué essentiellement :
   - soit par un silane polysulfuré "symétrique" (A2-1) répondant à la formule générale :

      (G⁶)_{b}(G⁵)_{3-b}Si-M-(Sₓ-M)ₘ-Si(G⁵)_{3-b}(G⁶)_{b} (II)
   dans laquelle :
   - les symboles G⁶ prennent l'une quelconque des significations données ci-avant pour G² ;
   - les symboles G⁵ prennent l'une quelconque des significations données ci-avant pour G¹ ;
   - b représente un nombre entier parmi 1, 2 et 3 ;
   - m représente un nombre entier égal à 1 ou 2 ;
   - x représente un nombre entier ou fractionnaire allant de 2 à 6 ;
   - les symboles M prennent l'une quelconque des significations données ci-avant pour Z ;
      - soit par un silane sulfuré "dissymétrique" (A2-2) répondant à la formule générale :

         (G⁶)_{b}(G⁵)_{3-b}Si-M-S_{z}-J (III)
   dans laquelle :
   - les symboles G⁶, G⁵, b et M répondent aux définitions données ci-avant pour la formule (II) ;
   - z représente un nombre entier ou fractionnaire allant de 1 à 4 ;
   - le symbole J représente :
      + lorsque z = 1 : un atome d'hydrogène ou un groupe -CO-R¹ ;
      + lorsque z est un nombre entier fractionnaire allant de 2 à 4 : un groupe -NR²R³ ou un groupe Bzt ou un groupe Bzt, (AA)y ;
      + avec : R¹ étant un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus ; R² et R³, identiques ou différents, étant un atome d'hydrogène et/ou l'un quelconque des groupes que représente R¹ ; R² et R³ pouvant en outre former ensemble et avec l'atome d'azote auquel ils sont liés, un cycle unique ayant de 5 à 7 chaînons, comportant dans le cycle 3 à 6 atomes de carbone, 1 ou 2 atome(s) d'azote et éventuellement 1 ou 2 double(s) liaison(s) ; le symbole Bzt représentant le groupe 2-benzothiazole éventuellement substitué par un ou plusieurs radicaux choisis parmi : un groupe hydrocarboné aliphatique saturé, ou un groupe carbocyclique saturé et/ou aromatique, monocyclique ou polycyclique, ou un groupe présentant une partie hydrocarbonée aliphatique saturée et une partie carbocyclique saturée et/ou aromatique, monocyclique ou polycyclique ; le symbole AA représentant un monoacide ou polyacide, organique ou minéral, oxygéné, dont l'une au moins des fonctions acides possède une constante d'ionisation dans l'eau, pKa, à 25°C, supérieure à 3 ; et y étant un nombre entier ou fractionnaire différent de 0 (zéro) et au plus égal à 3 ;
      + ledit système polyfonctionnel de couplage (A) est incorporé dans des compositions de caoutchouc à base d'élastomères isopréniques.

Par l'expression "composé organosilicique fonctionnalisé. (I)", on entend définir au sens de l'invention les composés suivants :
(i) au moins un organosilane fonctionnalisé correspondant à la formule (I) dans laquelle m=n=o=p=0(zéro), q=1 et a + a' = 3 ;
(2i) au moins un oligomère siloxane fonctionnalisé correspondant à la formule (I) dans laquelle : la somme a + a' se situe alors dans l'intervalle allant de 0 à 2, et soit au moins un des m, n, o, p est un nombre différent de 0 (zéro) et q est égal ou supérieur à 1, soit q est supérieur à 1 et chacun des m, n, o, p a une valeur quelconque ; et
(3i) un mélange d'organosilane(s) fonctionnalisé(s) (i) et/ou d'oligomère(s) siloxane(s) fonctionnalisé(s) (2i) entre eux.

S'agissant des oligomères siloxanes fonctionnalisés correspondant à la formule (I), ceux qui sont avantageusement visés dans la présente invention sont les espèces (2i) répondant aux définitions données ci-avant, dans la formule (I) desquelles la somme m + n + o + p + q (correspondant au nombre d'atomes de silicium de l'oligomère) se situe dans l'intervalle allant de 2 à 20, de préférence de 2 à 12 et par exemple de 2 à 6.

Dans la formule (I) précitée, on doit bien comprendre que le groupement (Z-CON=N-CO-A) est relié à l'atome de Si du motif SiO_{(3-a-a')/2} par l'intermédiaire du radical divalent -Z-.

Dans la formule (I) précitée, la fonction "X" de l'agent de couplage est la fonction azo activée CO-N=N-CO, tandis que la fonction "Y" est une fonction hydroxyle/hydrolysable -Si-G⁰ et/ou -Si-G². Dans la formule (II) précitée , la fonction "X" de l'agent de couplage est la fonction polysulfure Sₓ, tandis que la fonction "Y" est la fonction hydroxyle/hydrolysable -Si-G⁶. Dans la formule (III) précitée , la fonction "X" de l'agent de couplage est la fonction polysulfure S_{z}, tandis que la fonction "Y" est la fonction hydroxyle/hydrolysable -Si-G⁶.

Dans ce qui précède, par groupe hydrocarboné aliphatique, on entend un groupe linéaire ou ramifié, de préférence comprenant de 1 à 25 atomes de carbone, éventuellement substitué.

Avantageusement, ledit groupe hydrocarboné aliphatique comprend de 1 à 18 atomes de carbone, mieux de 1 à 8 atomes de carbone et mieux encore de 1 à 6 atomes de carbone.

A titre de groupe hydrocarboné aliphatique saturé, on peut citer les groupes alkyle, tels que les radicaux méthyle, éthyle, propyle, isopropyle, n-butyle, isobutyle, t-butyle, pentyle, isopentyle, néopentyle, 2-méthylbutyle, 1-éthylpropyle, hexyle, isohexyle, néohexyle, 1-méthylpentyle, 3-méthylpentyle, 1,1-diméthylbutyle, 1,3-diméthylbutyle, 2-éthylbutyle, 1-méthyl-1-éthylpropyle, heptyle, 1-méthylhexyle, 1-propylbutyle, 4,4-diméthylpentyle, octyle, 1-méthylheptyle, 2-éthylhexyle, 5,5-diméthylhexyle, nonyle, décyle, 1-méthylnonyle, 3,7-diméthyloctyle et 7,7-diméthyloctyle, hexadécyle.

Les groupes hydrocarbonés aliphatiques insaturés comprennent une ou plusieurs insaturations, de préférence une, deux ou trois insaturations de type éthylénique (double liaison) ou/et acétylénique (triple liaison).

Des exemples en sont les groupes alcényle ou alcynyle dérivant des groupes alkyle définis ci-dessus par élimination de deux atomes d'hydrogène, ou plus. De manière préférée, les groupes hydrocarbonés aliphatiques insaturés comprennent une seule insaturation.

Dans le cadre de l'invention, on entend par groupe carbocyclique, un radical monocyclique ou polycyclique, éventuellement substitué, de préférence en C₃-C₅₀. De façon avantageuse, il s'agit d'un radical en C₃-C₁₈, de préférence mono-, bi- ou tricyclique. Lorsque le groupe carbocyclique comprend plus d'un noyau cyclique (cas des carbocycles polycycliques), les noyaux cycliques sont condensés deux à deux. Deux noyaux condensés peuvent être orthocondensés ou péricondensés.

Le groupe carbocyclique peut comprendre, sauf indications contraires, une partie saturée et/ou une partie aromatique et/ou une partie insaturée.

Des exemples de groupes carbocycliques saturés sont les groupes cycloalkyle. De manière préférée, les groupes cycloalkyle sont en C₃-C₁₈, mieux encore en C₅-C₁₀. On peut citer notamment les radicaux cyclopentyle, cyclohexyle, cycloheptyle, cyclooctyle, adamantyle ou norbornyle.

Le carbocycle insaturé ou toute partie insaturée de type carbocyclique présente une ou plusieurs insaturations éthyléniques, de préférence une, deux ou trois. Il présente avantageusement de 6 à 50 atomes de carbone, mieux encore de 6 à 20, par exemple de 6 à 18. Des exemples de carbocycles insaturés sont les groupes cycloalcényles en C₆-C₁₀.

Des exemples de radicaux carbocycliques aromatiques sont les groupes (C₆-C₁₈)aryles, mieux encore (C₆-C₁₂)aryles et notamment phényle, naphtyle, anthryle et phénanthryle.

Un groupe présentant à la fois une partie aliphatique hydrocarbonée telle que définie ci-dessus et une partie carbocyclique telle que définie ci-dessus est, par exemple, un groupe arylalkyle tel que benzyle, ou un groupe alkylaryle tel que tolyle.

Les substituants des groupes ou parties aliphatiques hydrocarbonés et des groupes ou parties carbocycliques sont, par exemple, des groupes alcoxy dans lesquels la partie alkyle est préférablement telle que définie ci-dessus.

Par groupe monovalent hydrolysable dont il est question supra à propos des symboles G² et G⁶, on entend des groupes tels que, par exemple : les atomes d'halogène, notamment le chlore ; les groupes -O-G⁷ et -O-CO-G⁷ où G⁷ représente : un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus, G⁷ pouvant être éventuellement halogéné et/ou substitué par un ou plusieurs alcoxy ; les groupes -O-N=CG⁸G⁹ dans lesquels G⁸ et G⁹ prennent indépendamment l'une quelconque des significations données ci-dessus pour G⁷, G⁸ et G⁹ pouvant être halogénés ou/et éventuellement substitués par un ou plusieurs alcoxy ; les groupes -O-NG⁸G⁹ dans lesquels G⁸ et G⁹ sont tels que définis ci-dessus.

Avantageusement, un tel groupe monovalent hydrolysable est un radical : alcoxy, linéaire ou ramifié, en C₁-C₈ éventuellement halogéné et/ou éventuellement substitué par un ou plusieurs (C₁-C₈)alcoxy ; acyloxy en C₂-C₉ éventuellement halogéné ou éventuellement substitué par un ou plusieurs (C₁-C₈)alcoxy ; cycloalkyloxy en C₅-C₁₀ ; ou aryloxy en C₆-C₁₈. A titre d'exemple, le groupe hydrolysable est méthoxy, éthoxy, n-propoxy, isopropoxy, n-butoxy, méthoxyméthoxy, éthoxyéthoxy, méthoxyéthoxy, β-chloropropoxy ou β-chloroéthoxy ou bien encore acétoxy.

Comme groupes carbocycliques monovalents que peuvent former ensemble, dans la formule (I), les substituants G¹ et G² et l'atome de silicium auquel ils sont liés, on citera par exemple les cycles :

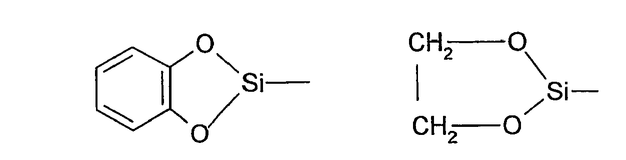

Comme cycles uniques que peuvent former ensemble d'une part les substituants G³ et G⁴ de l'atome d'azote présent dans le symbole A de la formule (I) et d'autre part les substituants R² et R³ de l'atome d'azote présent dans le symbole J de la formule (III), on citera par exemple les cycles suivants où la valence libre est portée par un atome d'azote : le pyrrole, l'imidazole, le pyrazole, la pyrrolidine, la Δ2-pyrroline, l'imidazolidine, la Δ2-imidazoline, la pyrazolidine, la Δ3-pyrazoline, la pipéridine ; des exemples préférés sont : le pyrrole, l'imidazole et le pyrazole.

Parmi les composés organosiliciques fonctionnalisés (A1), ceux qui conviennent bien (composés dits SA1-1) sont les composés :
➢ consistant dans :
   ■ (i) des organosilanes fonctionnalisés correspondant à la formule (I) dans laquelle : a + a'=3;m=n=o=p=0(zéro);etq=1;
   ■ (2i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
   ■ (3i) des mélanges d'espèce(s) (i) et/ou (2i) ;
➢ et dans les structures desquels :
   ■ les symboles G⁰, identiques ou différents, représentent chacun l'un des radicaux choisis ci-après pour G¹ ou G² ;
   ■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
   ■ les symboles G², identiques ou différents, représentent chacun : un radical hydroxyle, un radical alkoxy, linéaire ou ramifié, en C₁-C₈, éventuellement substitué par un ou plusieurs (C₁-C₈)alkoxy ;
   ■ Z représente le radical divalent -Z'-Z"- où :
      - Z' représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
      - Z" représente : un lien valenciel, -O- ou -NR⁴-, avec R⁴ étant : un atome d'hydrogène ; un radical alkyle, linéaire ou ramifié, en C₁-C₈ ; un radical cycloalkyle en C₅-C₁₀ ; un radical aryle en C₆-C₁₈ ; ou un radical (C₆-C₁₈)aryl-(C₁-C₈)alkyle ;
   ■ A désigne un groupe -O-G³ ou -NG⁴G³ où G³ et G⁴, identiques ou différents entre eux, représentent chacun : un radical alkyle, linéaire ou ramifié, en C₁-C₈; un radical cycloalkyle en C₅-C₁₀ ou un radical aryle en C₆-C₁₈.

Parmi les composés organosiliciques fonctionnalisés (A1), ceux qui conviennent plus particulièrement bien (composés dits SA1-2) sont les composés :
➢ consistant dans :
   ■ (i) des organosilanes fonctionnalisés correspondant à la formule (I) dans laquelle : a + a'=3;m=n=o=p=0 (zéro);et q=1;
   ■ (2i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
   ■ (3i) des mélanges d'espèce(s) (i) et/ou (2i) ;
➢ et dans les structures desquels :
   ■ les symboles G⁰, identiques ou différents, représentent chacun l'un des radicaux choisis ci-après pour G¹ ou G² ;
   ■ les symboles G¹, identiques ou différents, sont choisis dans le groupe formé par les radicaux méthyle, éthyle, propyle, isopropyle, cyclohexyle et phényle ;
   ■ les symboles G², identiques ou différents, sont choisis dans le groupe formé par les radicaux hydroxyle, méthoxy, éthoxy, n-propoxy, isopropoxy, n-butoxy, méthoxyméthoxy, éthoxyéthoxy et méthoxyéthoxy ;
   ■ Z représente le radical divalent -Z'-Z"- où :
      - Z' représente : une chaîne alkylène en C₁-C₈ ;
      - Z" représente : un lien valenciel, -O- ou -NR⁴-, avec R⁴ étant choisi dans le groupe formé par : l'hydrogène, les radicaux méthyle, éthyle, propyle, isopropyle, n-butyle, isobutyle, t-butyle, pentyle, hexyle, cyclohexyle, et benzyle ;
   ■ A désigne un groupe -O-G³ ou -NG⁴G³ où G³ et G⁴, identiques ou différents entre eux, sont choisis dans le groupe formé par les radicaux méthyle, éthyle, propyle, isopropyle, cyclohexyle et phényle.

Parmi les composés organosiliciques fonctionnalisés (A1), ceux qui conviennent spécialement bien (composés dits SA1-3) sont les composés :
➢ consistant dans :
   ■ (i) des organosilanes fonctionnalisés correspondant à la formule (I) dans laquelle : a + a'=3;m=n=o=p=0 (zéro);et q=1 ;
   ■ (2i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
   ■ (3i) des mélanges d'espèce(s) (i) et/ou (2i) ;
➢ et dans les structures desquels :
   ■ les symboles G⁰, identiques ou différents, représentent chacun l'un des radicaux choisis ci-après pour G¹ ou G² ;
   ■ les symboles G¹, identiques ou différents, sont choisis dans le groupe formé par les radicaux méthyle, éthyle, propyle, isopropyle, cyclohexyle et phényle ;
   ■ les symboles G², identiques ou différents, sont choisis dans le groupe formé par les radicaux hydroxyle, méthoxy, éthoxy, n-propoxy, isopropoxy et n-butoxy ;
   ■ Z représente le radical divalent -Z'-Z"- où :
      - Z' est choisi dans le groupe formé par les radicaux divalents méthylène, éthylène et propylène ;
      - Z" représente : un lien valenciel, -O ou -NR⁴- avec R⁴ étant un atome d'hydrogène ;
   ■ A désigne un groupe -O-G³ où G³ est choisi dans le groupe formé par les radicaux méthyle, éthyle, propyle, isopropyle, cyclohexyle et phényle.

Comme exemples de composés organosiliciques fonctionnalisés (A1) qui conviennent spécialement bien, on citera notamment les produits de formule :
- (C₂H₅O)₃Si-(CH₂)₃-NH-CO-N=N-COOC₂H₅ (A1-1)
- les mélanges des espèces (A1-1) avec les espèces (A1-1') et (A1-1") suivantes :
   [(CH₃)₃SiO_{½}] [(C₂H₅O)₂{(CH₂)₃-NH-CO-N=N-COOC₂H₅} SiO_{1/2}] (A1-1')
   [(CH₃)₃SiO_{1/2}]₂ [(C₂H₅O){(CH₂)₃-NH-CO-N=N-COOC₂H₅}SiO_{2/2}] (A1-1")
- (CH₃)₂(C₂H₅O)Si-(CH₂)₃-NH-CO-N=N-COOC₂H₅ (A1-2)
- (CH₃)(CH₃O)₂Si-(CH₂)₃-NH-CO-N=N-COOCH3 (A1-3)
- (CH₃)₂(OH)Si-(CH₂)₃-NH-CO-N=N-COOCH₃ (A1-4)
- (C₂H₅)₂(OH)Si-(CH₂)₃-NH-CO-N=N-COOC₂H₅ (A1-5)
- (CH₃)(CH₃O)₂Si-(CH₂)₃-CO-N=N-COOCH₃ (A1-6)
- (CH₃)₂(OH)Si-(CH₂)₃-CO-N=N-COOCH₃ (A1-7)
- (C₂H₅)₂(OH)Si-(CH₂)₃-CO-N=N-COOC₂H₅ (A1-8)

Parmi les organosilanes polysulfurés (A2), ceux qui conviennent bien (silanes dits SA2-1) sont les silanes "symétriques" de formule (II) dans laquelle :
■ b représente un nombre entier choisi parmi 1, 2 et 3 ;
■ les symboles G⁵, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G⁶, identiques ou différents, représentent chacun : un radical hydroxyle, un radical alkoxy, linéaire ou ramifié, en C₁-C₈, éventuellement substitué par un ou plusieurs (C₁-C₈)alkoxy ;
■ M représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ m est égal à 1 ;
■ x représente un nombre entier ou fractionnaire allant de 2 à 4.

Parmi les organosilanes polysulfurés (A2), ceux qui conviennent plus particulièrement bien (silanes dits SA2-2) sont les silanes de formule (II) dans laquelle :
■ b représente un nombre entier choisi parmi 1, 2 et 3 ;
■ les symboles G⁵, identiques ou différents, sont choisis dans le groupe formé par les radicaux méthyle, éthyle, propyle, isopropyle, cyclohexyle et phényle ;
■ les symboles G⁶, identiques ou différents, sont choisis dans le groupe formé par les radicaux hydroxyle, méthoxy, éthoxy, n-propoxy, isopropoxy, n-butoxy, méthoxyméthoxy, éthoxyéthoxy et méthoxyéthoxy ;
■ M représente une chaîne alkylène en C₁-C₈ ;
■ m est égal à 1 ;
■ x représente un nombre entier ou fractionnaire allant de 2 à 4.

Parmi les organosilanes polysulfurés (A2), ceux qui conviennent spécialement bien (silanes dits SA2-3) sont les silanes de formule (II) dans laquelle :
■ b représente un nombre entier choisi parmi 1, 2 et 3 ;
■ les symboles G⁵, identiques ou différents, sont choisis dans le groupe formé par les radicaux méthyle, éthyle, propyle, isopropyle, cyclohexyle et phényle ;
■ les symboles G⁶, identiques ou différents, sont choisis dans le groupe formé par les radicaux hydroxyle, méthoxy, éthoxy, n-propoxy et isopropoxy ;
■ M est choisi dans le groupe formé par les radicaux divalents méthylène, éthylène et propylène ;
■ m est égal à 1 ;
■ x représente un nombre entier ou fractionnaire allant de 2 à 4.

Comme exemples d'organosilanes polysulfurés (A2) qui conviennent spécialement bien, on citera notamment :
- le disulfure de bis-triéthoxysilylpropyle (en abrégé TESPD) de formule :

   (C₂H₅O)₃Si-(CH₂)₃-S₂-(CH₂)₃-Si(OC₂H₅)₃ (A2-1)
- le tétrasulfure de bis-triéthoxysilylpropyle (en abrégé TESPT) de formule :

   (C₂H₅O)₃Si-(CH₂)₃-S₄-(CH₂)₃-Si(OC₂H₅)₃ (A2-2)
- le tétrasulfure de bis- monohydroxydiméthylsilylpropyle de formule :
   (HO)(CH₃)₂ Si-(CH₂)₃ -S₄-(CH₂)₃-Si(CH₃)₂(OH) (A2-3)
   - le disulfure de bis-monoéthoxydiméthylsilylpropyle (en abrégé MESPD) de formule :

      (C₂H₅O)(CH₃)₂ Si-(CH₂)₃ -S₂-(CH₂)₃-Si(CH₃)₂(OC₂H₅) (A2-4)
   - le tétrasulfure de bis-monoéthoxydiméthylsilylpropyle (en abrégé MESPT) de formule:

      (C₂H₅O)(CH₃)₂ Si-(CH₂)₃ -S₄-(CH₂)₃-Si(CH₃)₂(OC₂H₅) (A2-5)

Les composés organosiliciques fonctionnalisés (A1) de type (i) peuvent être préparés selon un procédé de synthèse comportant les étapes suivantes :
(a) : on fait réagir un silane précurseur de formule :

   (G²)ₐ(G¹)_{a'}Si-P¹

   avec un dérivé hydrazo précurseur de formule :

   P²-NH-NH-CO-A

   formules dans lesquelles les symboles G¹, G² et A sont tels que définis ci-avant, a + a' = 3 et P¹ et P² représentent des groupes dont la structure et la fonctionnalité de chacun sont telles que ces groupes sont capables de réagir l'un avec l'autre pour donner naissance à l'enchaînement central -Z-CO- de manière à conduire au composé hydrazo de formule :

   (G²)ₐ(G¹)_{a'}Si-Z-CO-NH-NH-CO-A (IV)
(b) : on fait subir au composé de formule (IV) une réaction d'oxydation du groupe hydrazo selon le schéma suivant :

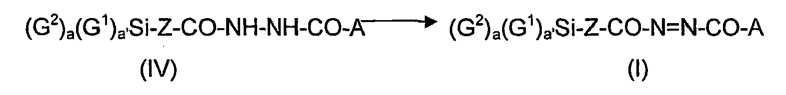

L'oxydation de l'étape (b) se produit facilement en opérant à l'aide d'un système oxydant à base par exemple de N-bromosuccinimide et de pyridine, utilisés en quantité stoechiométrique ou en excès par rapport à cette dernière.

Dans le cas par exemple de la préparation des organosilanes fonctionnalisés (A1) de formule (I) qui conviennent spécialement bien, dans la structure desquels le symbole Z représente alors le radical divalent -(CH₂)₃-NH-, le schéma de synthèse qui est appliqué est le suivant :
(a) : on fait réagir un silane précurseur de formule :

   (G²)ₐ(G¹)_{a'}Si-(CH₂)₃-NCO

   avec un dérivé hydrazo précurseur de formule :

   H₂N-NH-CO-A

   pour obtenir le composé hydrazo de formule :

   (G²)ₐ(G¹)_{a'}Si-(CH₂)₃-NH-CO-NH-NH-CO-A (IV)
(b) : on fait subir au composé de formule (IV) une réaction d'oxydation du groupe hydrazo selon le schéma suivant :

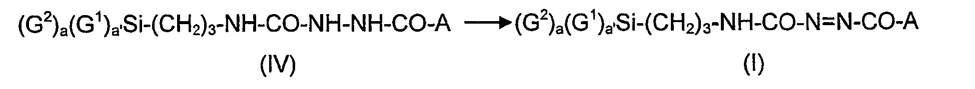

En ce qui concerne la manière pratique de mettre oeuvre le procédé qui vient d'être décrit sous (b), on se reportera pour plus de détails au contenu de FR-A-2340323.

Les composés organosiliciques fonctionnalisés (A1) de type (2i) et (3i) peuvent être préparés selon un procédé de synthèse consistant :
- à oxyder le groupe hydrazo du précurseur (IV) à l'aide d'un système oxydant comprenant au moins un oxydant (par exemple un halogène comme le brome) et au moins une base (par exemple une base minérale comme Na₂CO₃),
- en faisant intervenir un réactif supplémentaire choisi parmi un mono- ou polyalkoxysilane (par exemple le triméthyléthoxysilane),
- et en opérant de préférence au sein d'un milieu liquide organique (par exemple en utilisant un solvant comme le dichlorométhane).

Un mode opératoire avantageux pour conduire ce procédé consiste :
- à charger dans le réacteur à température ambiante (par exemple 23°C) : le précurseur (IV), la base (sa quantité dépendant de l'agent oxydant mis en oeuvre; par exemple, dans le cas du brome, on utilise deux équivalents molaires de base par rapport au brome), le solvant organique et le réactif supplémentaire (sa quantité correspondant par exemple à au moins un équivalent molaire par rapport au précurseur),
- puis à additionner progressivement dans le milieu réactionnel le système oxydant (sa quantité molaire étant par exemple stoechiométrique par rapport à celle du précurseur).

Les organosilanes polysulfurés (A2) peuvent être préparés selon divers procédés de synthèse connus que l'on trouve décrit dans de nombreux documents ; on citera notamment les documents suivants :
- s'agissant des silanes polysulfurés "symétriques" : EP-A-0680997, EP-A-1043357, WO-A-02/30939, WO-A-02/31041, WO-A-02/083719, US-A-4128438 ;
- s'agissant des silanes sulfurés "dissymétriques" : EP-A-0074632, EP-A-0939081, EP-A- 0945556, WO-A-03/002574, WO-A-03/053983, FR-A-2839720.

Certains organosilanes (A2) sont disponibles dans le commerce : le TESPD est commercialisé par exemple par la société DEGUSSA sous la dénomination Si75 (sous forme d'un mélange de disulfure - à 75% en poids - et de polysulfures), ou encore par la société GE-OSI sous la dénomination Silquest A1589 ; le TESPT est commercialisé par exemple par la société DEGUSSA sous la dénomination Si69 (ou X50S lorsqu'il est supporté à 50% en poids sur du noir de carbone), ou encore par la société GE-OSI sous la dénomination Siquest A1289 (dans les deux cas, mélange commercial de polysulfures avec une valeur moyenne pour le x de Sx dans la formule (II) proche de 4).

L'homme du métier comprend que les agents de couplage (A1) et/ou (A2) précédemment décrits pourraient être préalablement greffés sur les charges inorganiques renforçantes, notamment sur de la silice, par l'intermédiaire de leur(s) fonction(s) "Y" , les charges inorganiques renforçantes ainsi précouplées pourraient ensuite être liées à l'élastomère par l'intermédiaire de leur(s) fonction(s) libre(s) "X". Les agents de couplage (A1) et/ou (A2) pourraient être encore préalablement greffés sur l'élastomère isoprénique par l'intermédiaire de leur(s) fonction(s) "X", l'élastomère ainsi fonctionnalisé pouvant ensuite être liées à la charge inorganique par l'intermédiaire de leur(s) fonction(s) libre(s) "Y". On préfère toutefois, notamment pour des raisons de meilleure mise en oeuvre des compositions de caoutchouc à l'état cru, utiliser tout ou partie des agents de couplage soit greffé sur la charge, soit à l'état libre (c'est-à-dire non greffé).

### DEUXIEME OBJET DE L'INVENTION

Un deuxième objet de la présente invention concerne les compositions comprenant :
(B) au moins un élastomère isoprénique,
(C) une charge inorganique renforçante, et
(A) une quantité adéquate du système de couplage consistant dans l'association particulière résidant dans la combinaison des ingrédients (A1) et (A2) indiqués ci-avant.

Plus précisément, ces compositions comprennent (les parties étant données en poids) :
- pour 100 parties d'élastomère(s) isopréniques(s),
- de 10 à 200 parties de charge inorganique (C), de préférence de 30 à 150 parties et plus préférentiellement de 40 à 120 parties,
- une quantité de combinaisons (A1) + (A2) qui apporte dans chaque composition :
   - 0,5 à 15 parties, et de préférence 1 à 10 parties, d'ingrédient (A1), et
   - 0,5 à 15 parties, et de préférence 1 à 10 parties, d'ingrédient (A2).

De manière avantageuse, la quantité de combinaison (A1) + (A2), où les proportions de ingrédients (A1) et (A2) sont choisies dans les zones générales et préférentielles précitées, est déterminée de manière à ce qu'elle représente de 1 à 20%, de préférence de 2 à 15%, plus préférentiellement de 3 à 10%, par rapport au poids de la charge inorganique renforçante.

De manière plus avantageuse, les proportions des ingrédients (A1) et (A2), d'une part choisies dans les zones générales et préférentielles précitées et d'autre part donnant une somme (A1) + (A2) avantageusement située dans les zones générales et préférentielles précitées, sont en plus déterminées de manière à ce que le rapport pondéral ingrédient (A1) / ingrédient (A2) se situe dans l'intervalle allant de 0,1 à 10, de préférence de 0,15 à 5 et plus préférentiellement de 0,3 à 3.

Nous allons revenir dans ce qui suit sur les définitions du composé (B) consistant dans au moins un élastomère isoprénique et du composé (C) consistant dans une charge inorganique renforçante.

Par élastomères isopréniques qui sont mis en oeuvre pour les compositions conformes au deuxième objet de l'invention, on entend plus précisément :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
   - (2.1) les monomères diènes conjuguées, autres que l'isoprène, ayant de 4 à 22 atomes de carbone, comme par exemple : le butadiène-1,3, le diméthyl-2,3 butadiène-1,3, le chloro-2 butadiène-1,3 (ou chloroprène), le phényl-1 butadiène-1,3, le pentadiène-1,3, l'hexadiène-2,4 ;
   - (2.2) les monomères vinyles aromatiques ayant de 8 à 20 atomes de carbone, comme par exemple : le styrène, l'ortho-, méta- ou paraméthylstyrène, le mélange commercial "vinyl-toluène", le paratertiobutylstyrène, les méthoxystyrènes, les chlorostyrènes, le vinylmésitylène, le divinylbenzène, le vinylnaphtalène ;
   - (2.3) les monomères nitriles vinyliques ayant de 3 à 12 atomes de carbone, comme par exemple l'acrylonitrile, le méthacrylonitrile ;
   - (2.4) les monomères esters acryliques dérivés de l'acide acrylique ou de l'acide méthacrylique avec des alcanols ayant de 1 à 12 atomes de carbone, comme par exemple l'acrylate de méthyle, l'acrylate d'éthyle, l'acrylate de propyle, l'acrylate de n-butyle, l'acrylate d'isobutyle, l'acrylate d'éthyl-2 hexyle, le méthacrylate de méthyle, le méthacrylate d'éthyle, le méthacrylate de n-butyle, le méthacrylate d'isobutyle ;
   - (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire (allant de 51 % à 99,5 % et, de préférence, de 70 % à 99 % en poids) d'élastomère précité (1) ou (3) et une quantité minoritaire (allant de 49 % à 0,5 % et, de préférence, de 30 % à 1 % en poids) d'un ou plusieurs élastomères diéniques autres qu'isopréniques.

Par élastomère diénique autre qu'isoprénique, on entend de manière connue en soi :
les homopolymères obtenus par polymérisation d'un des monomères diènes conjugués définis ci-avant au point (2.1), comme par exemple le polybutadiène et le polychloroprène ; les copolymères obtenus par copolymérisation d'au moins deux des diènes conjugués précités (2.1) entre eux ou par copolymérisation d'un ou plusieurs des diènes conjugués précités (2.1) avec un ou plusieurs monomères insaturés précités (2.2), (2.3) et/ou (2.4), comme par exemple le poly(butadiène-styrène) et le poly(butadiène-acrylonitrile) ; les copolymères ternaires obtenus par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'héthylidène-norbornène, le dicyclopentadiène (élastomère EPDM).

A titre préférentiel, on fait appel à un ou plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutcouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène), le poly(butadiène-acrylonitrile), et un terpolymère (éthylène-propylène-diène monomère conjugué).

A titre plus préférentiel, on fait appel à un ou plusieurs élastomères isopréniques choisis parmi : (1) les polyisoprènes de synthèse homopolymères ; (3) le caoutchouc naturel ; (5) un mélange des élastomères précités (1) et (3) ; (6) un mélange contenant une quantité majoritaire d'élastomère précité (1) ou (3) et une quantité minoritaire d'élastomère diénique autre qu'isoprénique consistant dans le polybutadiène et le poly(butadiène-styrène).

Dans le présent exposé, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone. L'expression "charge inorganique renforçante" englobe encore dans sa définition des charges mixtes à base de charge "blanche" et de noir de carbone. Cette charge inorganique doit être capable de renforcer à elle seule, sans autre moyen qu'un agent de couplage intermédiaire, une composition de caoutchouc technique, en d'autres termes capable de remplacer, dans sa fonction de renforcement, une charge conventionnelle à base seulement de noir de carbone.

L'état physique sous lequel se présente la charge inorganique renforçante est indifférent, c'est-à-dire que ladite charge peut se présenter sous forme de poudre, de granulés ou de billes (microperles).

De manière préférentielle, la charge inorganique renforçante ou composé (C) consiste dans de la silice, de l'alumine, du noir de carbone recouvert totalement ou partiellement par de la silice et/ou de l'alumine ou un mélange de ces espèces.

De manière plus préférentielle, la charge inorganique renforçante consiste dans de la silice, prise seule ou en mélange avec de l'alumine.

A titre de silice susceptible d'être mise en oeuvre dans l'invention conviennent toutes les silices précipitées et les silices pyrogénées (silices de combustion) connues de l'homme de l'art présentant, de préférence, une surface spécifique BET inférieure ou égale à 450 m²/g. On préfère les silices précipitées, celles-ci pouvant être classiques ou hautement dispersibles.

Par silice hautement dispersible, on entend toute silice ayant une aptitude à la désagglomération et à la dispersion dans une matrice polymérique très importante observable par microscopie électronique ou optique, sur coupes fines. Parmi les silices précipitées hautement dispersibles on peut utiliser notamment celles ayant une surface spécifique CTAB inférieure ou égale à 450 m²/g, de préférence comprise entre 30 et 400 m²/g, et en particulier celles décrites dans le brevet US-A-5403570 et les demandes WO-A-95/09127 et WO-A-95/09128 dont le contenu est incorporé ici. Comme exemples non limitatifs de telles silices précipitées très dispersibles préférentielles, on peut citer les silices Zeosil 1165 MP et 1115 MP de la société RHODIA, les silices BV3380 et Ultrasil 7000 de la société DEGUSSA, les silices Hi-Sil 2000 et Hi-Sil EZ 150G de la société PPG, les silices Zeopol 8715, 8741, 8745 ou 8755 de la société HUBER. Conviennent aussi les silices précipitées traitées telles que par exemple les silices "dopées" à l'aluminium décrites dans la demande de brevet EP-A-0735088 dont le contenu est également incorporé ici.

A titre plus préférentiel, conviennent bien les silices de précipitation ayant :
- une surface spécifique CTAB de 60 à 250 m²/g, de préférence de 80 à 230 m²/g,
- une surface spécifique BET de 60 à 260 m²/g, de préférence de 80 à 240 m²/g,
- un rapport spécifique BET / surface spécifique CTAB de 1,0 à 1,6.

Bien entendu, par silice, on entend également des coupages de différentes silices. La surface spécifique CTAB est déterminée selon la méthode NFT 45007 de novembre 1987. La surface spécifique BET est déterminée selon la méthode de BRUNAUER, EMMETT, TELLER décrite dans "The Journal of the American Chemical Society, vol. 60, page 309 (1938)" correspondant à la norme NF ISO 9277 de décembre 1996.

A titre d'alumine renforçante, on utilise avantageusement une alumine hautement dispersible ayant :
- une surface spécifique BET de 30 à 400 m²/g, de préférence de 60 à 250 m²/g,
- une taille moyenne de particules d'au plus 500 nm, de préférence d'au plus 200 nm, et
- un taux élevé de fonctions réactives de surface Al-OH,
par exemple telle que décrite dans le document EP-A-0810258.

Comme exemples non limitatifs de telles alumines renforçantes, on peut citer notamment les alumines A125, CR125, D65CR de la société BAÏKOWSKI.

A titre de noirs de carbone recouverts totalement ou partiellement par une charge "blanche", on peut citer notamment les produits de la gamme ECOBLACK de la société CABOT, et en particulier le produit référencé CRX 2000.

A titre d'autres exemples de charge inorganique susceptible d'être utilisée dans les compositions de caoutchouc de l'invention peuvent être encore cités des (oxyde-) hydroxydes d'aluminium, des aluminosilicates, des oxydes de titane, des carbures ou nitrures de silicium, tous du type renforçants tels que décrits par exemple dans les demandes WO-A-99/28376, WO-A-00/73372, WO-A-02/053634, WO-A-2004/003067, WO-A-2004/056915.

Les compositions conformes à l'invention contiennent en outre un ingrédient (D) comprenant tout ou partie des autres constituants et additifs auxiliaires habituellement utilisés dans le domaine des compositions d'élastomère(s) et de caoutchouc(s).

Ainsi, on peut mettre en oeuvre tout ou partie des autres constituants et additifs suivants :
■ s'agissant du système de vulcanisation, on peut citer par exemple :
   - (D1) : à titre obligatoire, des agents de vulcanisation choisis parmi le soufre ou des composés donneurs de soufre, comme par exemple des dérivés de thiurame ; s'agissant par exemple du soufre, il est utilisé de manière connue à un taux allant de 0,5 à 10 et de préférence de 0,5 à 5 parties en poids pour 100 parties en poids d'élastomère(s) isoprénique(s) ;
   - (D2) : à titre facultatif, des accélérateurs de vulcanisation, comme par exemple des dérivés de guanidine et des dérivés de sulfénamide ; un tel activateur, quand on en utilise un, est employé de manière connue à un taux allant de 0,5 à 10 et de préférence de 0,5 à 5 parties en poids pour 100 parties en poids d'élastomère(s) ;
   - (D3) : à titre facultatif, des activateurs de vulcanisation, comme par exemple l'oxyde de zinc, l'acide stéarique et le stéarate de zinc ;
■ s'agissant d'autre(s) additif(s), on peut citer par exemple :
   - (D4) : à titre facultatif, une charge renforçante conventionnelle consistant dans le noir de carbone ; comme noirs de carbone conviennent tous les noirs de carbone, notamment les noirs du type HAF, ISAF, SAF ; à titre d'exemples non limitatifs de tels noirs de carbone, on peut citer les noirs de carbone N115, N134, N234, N339, N347, N375 ; la quantité de noir de carbone est déterminée de manière à ce que d'une part la charge inorganique renforçante mise en oeuvre représente plus de 50 % du poids de l'ensemble charge inorganique + noir de carbone, et d'autre part la quantité de charge renforçante totale (charge inorganique + noir de carbone) reste dans les intervalles de valeurs indiqués supra, pour la charge inorganique renforçante, à propos de la constitution pondérale des compositions ;
   - (D5) : à titre facultatif, une charge blanche conventionnelle peu ou non renforçante comme par exemple des argiles, la bentonite, le talc, la craie, le kaolin, le dioxyde de titane ou un mélange de ces espèces ;
   - (D6) : à titre facultatif, des agents protecteurs, comme par exemple des agents antioxydants et/ou des agents antiozonants, comme par exemple la N-phényl-N'-(diméthyl-1,3 butyl)-p-phénylène-diamine ;
   - (D7) : à titre facultatif, des agents de plastification et des agents d'aide à la mise en oeuvre.

S'agissant des agents d'aide à la mise en oeuvre (D7), les compositions conformes à l'invention peuvent contenir des agents de recouvrement de la charge renforçante, comportant par exemple la seule fonction "Y", susceptibles, de manière connue, grâce à une amélioration de la dispersion de la charge dans la matrice de caoutchouc et à un abaissement de la viscosité des compositions, d'améliorer la faculté de mise en oeuvre des compositions à l'état cru. De tels agents consistent par exemple dans des silanes hydroxylés ou hydrolysables (notamment des alkyltriéthoxysilanes), des polyalkylèneglycols (par exemple des polyéthylèneglycols), des alcanol-amines (par exemple des trialcanol-amines), et des polyorganosiloxanes α,ω-dihydroxylés. Un tel agent d'aide à la mise en oeuvre, quand on en utilise un, est employé à raison de 1 à 10 parties en poids, et de préférence 2 à 8 parties, pour 100 parties de charge inorganique renforçante.

### TROISIEME OBJET DE L'INVENTION

Un troisième objet de la présente invention concerne le procédé de préparation des compositions d'élastomère(s) comprenant une charge inorganique renforçante et une quantité efficace du système de couplage. Ce procédé peut se faire selon un mode opératoire classique en deux phases 1 et 2 dans lesquelles :
- phase 1 (dite étape non-productive "à chaud") : on introduit et malaxe dans un mélangeur interne usuel, en une ou deux étapes ou plus de deux étapes, tous les ingrédients nécessaires, à l'exception généralement du (ou des) agent(s) de vulcanisation (D1) ; à titre illustratif, on peut ainsi introduire et malaxer tous les ingrédients ci-après définis : élastomère(s) (B), charge inorganique (C), tout ou une partie de l'agent de couplage (A2), éventuellement tout ou partie de l'agent de couplage (A1), éventuellement au moins un agent de recouvrement (D7), éventuellement un (ou des) accélérateur(s) de vulcanisation (D2), éventuellement un (ou des) activateur(s) de vulcanisation (D3), éventuellement un (ou des) agent(s) protecteur(s) (D6), éventuellement une (ou des) charge(s) renforçante(s) non-blanche(s) (D4), éventuellement une (ou des) charge(s) blanche(s) peu ou non renforçante(s) (D5) ; on opère à une température comprise entre 40 et 200°C, de préférence entre 60 et 180°C ; une ou plusieurs étape(s) ultérieure(s)de travail thermomécanique peut (peuvent) être réalisée(s) dans le mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion dans la matrice élastomérique de la charge inorganique renforçante et des agents de couplage ; au cours de pareille(s) étape(s) ultérieure(s), il est possible d'introduire l'un et/ou l'autre des ingrédients nécessaires évoqués ci-avant ;
- phase 2 (dite phase productive "à froid") : puis le mélange ainsi obtenu est repris sur un mélangeur externe et on y ajoute alors le (ou les) agent(s) de vulcanisation et éventuellement un ou plusieurs autre(s) ingrédient(s) ; à titre illustratif, on ajoute ainsi les ingrédients suivants : éventuellement le reste d'agent de couplage (A2), éventuellement la totalité ou le reste d'agent de couplage (A1), un (ou des) agent(s) de vulcanisation (D1), éventuellement un (ou des) accélérateur(s) de vulcanisation (D2), éventuellement un (ou des) activateur(s) de vulcanisation (D3), éventuellement un (ou des) agent(s) protecteur(s) (D6) ; on opère à une température plus basse, inférieure à 120°C, et de préférence de 25 à 100°C.

De manière préférentielle, le procédé de préparation des compositions d'élastomère(s) se fait selon le mode opératoire classique en deux phases 1 et 2 dans lequel :
- l'agent de couplage (A2) est introduit en totalité au cours de la phase 1 en même temps que la charge inorganique renforçante,
- tandis que l'agent de couplage (A1) est
   - soit introduit en totalité au cours de la phase 1,
   - soit introduit en totalité au cours de la phase 2,
   - soit fractionné entre les deux phases 1 et 2, la première fraction incorporée en phase 1 correspondant à une proportion de 10 à 80% en poids, la seconde fraction incorporée en phase 2 correspondant à une proportion de 20 à 90% en poids.

De manière encore plus préférentielle, le procédé de préparation des compositions d'élastomère(s) est conduit comme indiqué ci-avant à propos de la modalité préférentielle, mais en procédant cette fois au fractionnement de l'agent de couplage (A1) sur les deux phases 1 et 2.

Il convient de noter qu'il est possible d'introduire tout ou partie des agents de couplage (A1) et/ou (A2) sous forme supportée (la mise sur support étant réalisée au préalable) sur un solide compatible avec les structures chimiques correspondant à ces agents de couplage ; pareil support consiste notamment dans le noir de carbone. Par exemple, lors du fractionnement des agents de couplage (A1) et/ou (A2) sur les deux phases 1 et 2, il peut être avantageux d'introduire le (ou les) agent(s) de couplage sur le mélangeur externe de la phase 2 après une mise sur support de (ou des) agent(s) de couplage afin de faciliter leur incorporation et leur dispersion.

La composition finale obtenue est ensuite calandrée par exemple sous la forme d'une feuille, d'une plaque ou encore d'un profilé utilisable pour la fabrication d'articles en élastomère(s).

La vulcanisation (ou cuisson) est conduite de manière connue à une température allant généralement de 130 à 200°C, pendant un temps suffisant qui peut varier par exemple entre 5 et 90 minutes en fonction notamment de la température de cuisson, du système de vulcanisation adopté et de la cinétique de vulcanisation de la composition considérée.

Il va de soi que la présente invention, prise dans son deuxième objet, concerne les compositions d'élastomère(s) précédemment décrites tant à l'état cru (c'est-à-dire avant cuisson) qu'à l'état cuit (c'est-à-dire après réticulation ou vulcanisation).

### QUATRIEME OBJET DE L'INVENTION

Un quatrième objet de la présente invention concerne les articles en élastomère(s) isoprénique(s) possédant un corps comprenant les compositions décrites ci-avant dans le cadre du deuxième objet de l'invention. La présente invention est particulièrement utile pour préparer des articles consistant par exemple dans des supports de moteurs, des semelles de chaussures, des galets de téléphériques, des joints d'appareillages électroménagers et des gaines de câbles.

Les exemples suivants illustrent la présente invention.

### EXEMPLE 1

Cet exemple illustre la préparation d'un agent de couplage de type (A1-1).

Nous avons suivi le schéma réactionnel suivant :

(C₂H₅O)₃Si-(CH₂)₃-NCO + H₂N-NH-COOC₂H₅ (C₂H₅O)₃Si-(CH₂)₃-NH-CO-NH-NH-

COOC₂H₅

### 1) Synthèse de l'ingrédient précurseur :

### 1.1) Charges

| | | |
|---|---|---|
| Isocyanatopropyltriéthoxysilane à 96% | 99,8 g | 384 mmol |
| Carbazate d'éthyle | 41,2 g | 384 mmol |
| Toluène Anhydre | 384 ml | - |

### 1.2) Protocole opératoire

Le carbazate d'éthyle et le toluène anhydre sont chargés à température ambiante (23°C) dans le réacteur qui est mis sous atmosphère d'argon.

Le réacteur est mis sous agitation à 300 tours/minute et le mélange réactionnel est ensuite chauffé à 60°C. Le mélange réactionnel devient pratiquement homogène à chaud.

Les 99,8 g de silane sont ensuite additionnés en 60 minutes à l'aide d'une ampoule de coulée isobare.

Le mélange réactionnel est maintenu 2 heures sous agitation à 60°C avant retour à température ambiante.

Le mélange réactionnel est laissé au repos quelques heures à température ambiante.

Un solide blanc cristallise. Il est ensuite filtré, lavé par 2 fois 150 ml d'éther isopropylique puis essoré sous vide. Le solide est finalement mis à séché à l'étuve à 60°C jusqu'à poids constant m = 131,5 g.

Le produit est analysé par RMN (pureté molaire > 99%). Rendement = 97,4%.

### 2) Synthèse de l'ingrédient (A1-1) :

L'ingrédient (A1-1) est obtenu en une étape à partir du précurseur par oxydation de la fonction hydrazino en fonction azo utilisant un système oxydant à base de N-Bromosuccinimide (NBS) et de pyridine ajoutés en quantités stoechiométriques par rapport au précurseur.

### 2.1) Charges :

| | | |
|---|---|---|
| Précurseur | 20,0 g | 57 mmol |
| N-Bromosuccinimide 99% | 10,13 g | 57 mmol |
| Pyridine | 4,5 g | 57 mmol |
| Dichlorométhane | 100 ml | - |

### 2.2) Protocole opératoire :

Le précurseur, la pyridine et le dichlorométhane sont chargés dans un réacteur qui est mis sous atmosphère d'argon ; le milieu réactionnel est homogène pratiquement incolore.

Le N-Bromosuccinimide est ajouté en 30 minutes à la spatule. La température est maintenue inférieure à 25°C. Dès le premier ajout de NBS, le milieu réactionnel devient orange vif.

Le milieu réactionnel est maintenu sous agitation à température ambiante pendant 2 heures après la fin de l'addition du NBS.

Le milieu réactionnel est concentré sous pression réduite à l'évaporateur rotatif.

Le résidu, qui se présente sous la forme d'une pâte orangée, est repris par 100 ml d'un mélange heptane/iPr₂O (1/1 : vol/vol) puis filtré sur verre fritté (125 ml) de porosité 4. Le gâteau de filtration est lavé par 4 fois 25 ml supplémentaires du mélange de solvant précédent.

Les eaux-mères sont filtrées une seconde fois sur le gâteau. Le filtrat est concentré sous pression réduite.

Un liquide orange vif inodore est obtenu : m = 18,8 g. Ce liquide est analysé par RMN ; sa composition molaire est la suivante : ingrédient (A1-1) 94,5% en mole ; composé précurseur : 0,2% en mole ; succinimide : 5% en mole et résidus pyridiniques : 0,3%.

### EXEMPLE 2

Cet exemple a pour but de démontrer les performances de couplage (charge blanche-élastomère) d'une association particulière résidant dans la combinaison :
- d'un ingrédient (A1) consistant essentiellement dans l'organosilane de formule :

   (C₂H₅O)₃Si-(CH₂)₃-NH-CO-N=N-COOC₂H₅) (A1-1)
- et d'un ingrédient (A2) consistant essentiellement dans l'organosilane de formule :

   (C₂H₅O)₃Si-(CH₂)₃-S₄-(CH₂)₃-Si(OC₂H₅)₃ (A2-2)

Ces performances sont comparées d'une part à celle d'un agent de couplage à base de l'ingrédient (A1) utilisé seul et d'autre part à celle d'un agent de couplage à base de l'ingrédient (A2) utilisé seul.

On compare 4 compositions d'élastomères représentatives de formulation de semelles de chaussure. Ces 4 compositions sont identiques aux différences près suivantes :
- composition n° 1 (témoin 1) : absence d'agent de couplage ;
- composition n° 2 (témoin 2) : agent de couplage introduit en totalité au mélangeur interne, apportant dans la composition 4 pce de silane (A2-2) ;
- composition n° 3 (témoin 3) : agent de couplage, fractionné entre mélangeur interne (3,8 pce) et mélangeur externe (1,5 pce), apportant à la composition 5,3 pce de silane (A1-1) ;
- composition n° 4 (exemple 2) : combinaison d'agents de couplage apportant dans la composition 4,9 pce de silanes (A2-2) et (A1-1) ; le silane (A2-2) est introduit en totalité (1,9 pce) en mélangeur interne, tandis que le silane (A2-2) est fractionné entre mélangeur interne (1,5 pce) et mélangeur externe (1,5 pce).

### 1) Constitution des compositions d'élastomères :

Dans un mélangeur interne de type BRABENDER sont préparées lesdites compositions dont la constitution, exprimée en partie en poids pour 100 parties d'élastomères (pce), est indiquée dans le tableau I donné ci-après :

**Tableau I**

| Composition | Témoin 1 | Témoin 2 | Témoin 3 | Exemple 2 |
|---|---|---|---|---|
| NR (1) | 80 | 80 | 80 | 80 |
| BR (2) | 20 | 20 | 20 | 20 |
| Silice (3) | 50 | 50 | 50 | 50 |
| Agent de couplage 1 (4) | - | 4,0 | - | 1,9 |
| Agent de couplage 2 (5) | - | - | 3,8 | 1,5 |
| ZnO - 80% | 3,75 | 3,75 | 3,75 | 3,75 |
| Acide stéarique | 2,5 | 2,5 | 2,5 | 2,5 |
| Antioxydant (6) | 1,9 | 1,9 | 1,9 | 1,9 |
| Agent de couplage 2 (5) | - | - | 1,5 | 1,5 |
| CBS-80% (7) | 1,88 | 1,88 | 1,88 | 1,88 |
| TBzTD (8) | 0,2 | 0,2 | 0,2 | 0,2 |
| Soufre - 80% | 1,88 | 1,88 | 1,88 | 1,88 |
| Noir de carbone (N330) | 4,0 | 4,0 | 4,0 | 4,0 |

| | | | | |
|---|---|---|---|---|
| Légende : (1) Caoutchouc naturel SMR - CV60 (foumi par la société Safic-Alcan). (2) Polybutadiène ou BR (Buna CB24 de la société Bayer) avec 96% min de cis 1-4 et préparé par catalyse au Néodyme. (3) Silice (Z1165 MP de la société Rhodia) avec surfaces BET et CTAB voisines de 150-160 m²/g. (4) TESPT (Silquest A1289 de la société GE-Osi). (5) [(3-triéthoxysilyl-propyl)-amino]carbonyldiazenecarboxylate d'éthyle (synthétisé selon le mode opératoire décrit dans l'exemple 1). (6) N-1,3-diméthylbutyl-N-phényl-para-phénylènediamine (Santoflex 6-PPD de la société Flexsys). (7) N-cyclohexyl-2-benzothiazyl-sulfénamide (Rhénogran CBS-80 de la société Bayer). (8) Disulfure de tétrabenzylthiurame (Perkacit TBzTD de la société Flexsys). | | | | |

Les agents de couplage sont utilisés à un taux isomolaire en silicium, c'est-à-dire que l'on utilise, quelle que soit la composition, le même nombre de moles de fonctions "Y" ici ["Y" = Si(OC₂H₅)₃] réactives vis-à-vis de la silice et de ses groupes hydroxyles de surface.

### 2) Préparation des compositions d'élastomères :

Le procédé de préparation des compositions d'élastomères est conduite en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque BRABENDER (capacité de 70 ml). Le coefficient de remplissage est de 0,75. La température initiale et la vitesse des rotors sont fixées à chaque fois de manière à atteindre des températures de tombée de mélange voisines de 140-160°C.

Elle permet d'incorporer les élastomères, puis la charge renforçante (introduction fractionnée) avec tout ou partie du (ou des) agent(s) de couplage, puis les divers activateurs de vulcanisation (acide stéarique, oxyde de zinc) et l'agent protecteur (6-PPD). Pour cette phase, la durée est comprise entre 5 et 10 minutes.

Après refroidissement du mélange (température inférieure à 100°C), la seconde phase permet l'introduction du système de vulcanisation (soufre et accélérateurs) et éventuellement le reste du (ou des) agent(s) de couplage et éventuellement une charge renforçante conventionnelle (noir de carbone). Elle est réalisée sur un mélangeur à cylindres, préchauffé à 50°C. La durée de cette phase est comprise entre 2 et 6 minutes.

Il faut noter que lors du fractionnement entre les deux mélangeurs de la quantité du (ou des) agent(s) de couplage , l'introduction dudit (ou desdits) agent(s) de couplage sur la mélangeur à cylindres est réalisé de préférence après une mise sur support (au préalable) avec le noir de carbone.

La composition finale est ensuite calandrée sous la forme de plaques d'épaisseur 2-3 mm.

Sur ces mélanges dits crus, une évaluation de leurs propriétés rhéologiques permet d'optimiser la durée et la température de vulcanisation.

Ensuite, les propriétés mécaniques et dynamiques des mélanges vulcanisés à l'optimum sont mesurées.

### 3) Rhéométrie des compositions :

Les mesures sont réalisées sur les compositions à l'état cru. On a porté dans le tableau Il les résultats concernant le test de rhéologie qui est conduit à 150°C au moyen d'un rhéomètre ODR MONSANTO 100 S selon la norme DIN 53529.

Selon ce test, la composition à tester est placée dans la chambre d'essai régulée à la température de 150°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :
- le couple minimum (Cm) qui reflète la viscosité de la composition à la température considérée ;
- le couple maximum (CM) ;
- le delta-couple (ΔC = CM - Cm) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au dessus du couple minimum à la température considérée (150°C) et qui reflète le temps pendant lequel il est possible de mettre en oeuvre les mélanges crus à cette température sans avoir d'initiation de la vulcanisation.

Les résultats obtenus sont indiqués dans le tableau II.

**Tableau II**

| Référence | Témoin 1 | Témoin 2 | Témoin 3 | Exemple 2 |
|---|---|---|---|---|
| Cm (dN.m) | 20,5 | 15,5 | 39,1 | 22,8 |
| CM (dN.m) | 74,5 | 82,9 | 99,7 | 85,8 |
| Delta couple (dN.m) | 54 | 67,4 | 60,6 | 63 |
| TS 2 (min) | 6,27 | 7,92 | 8,82 | 8,92 |
| T98 (min) | 11,52 | 16,20 | 12,42 | 15,00 |
| Vret max (dN.m/min) | 11,40 | 10,84 | 15,32 | 12,95 |

### 4) Propriétés mécaniques des vulcanisats :

Les mesures sont réalisées sur les compositions vulcanisées à l'optimum (T98) pour une température de 150°C.

Les essais de traction uniaxiale sont réalisés conformément aux indications de la norme NF T 46-002 avec des éprouvettes de type H2 à une vitesse de 500 mm/min sur un appareil INSTRON 5564. Les modules 10 %, 100 %, 300 %, et la résistance à la rupture sont exprimés en MPa ; l'allongement à la rupture est exprimé en %. Il est possible de déterminer un indice de renforcement à partir du rapport entre les modules à 300 % et le module à 100 % de déformation.

La mesure de dureté Shore A des vulcanisats est réalisée selon les indications de la norme ASTM D 2240. La valeur donnée est mesurée à 15 secondes.

La mesure de perte de masse par abrasion est réalisée selon les indications de la norme DIN 53516 qui utilise un abrasimètre Zwick où l'éprouvette cylindrique est soumise à l'action d'une toile abrasive de grains P60 et fixée sur la surface d'un tambour tournant sous une pression de contact de 10N et pour une course de 40 mètres.

La valeur mesurée est un volume de perte de substance (en mm³) après usure par abrasion; plus elle est faible et meilleure est la résistance à l'abrasion.

Les propriétés mesurées sont rassemblés dans le tableau III.

**Tableau III**

| Référence | Témoin 1 | Témoin 2 | Témoin 3 | Exemple 2 |
|---|---|---|---|---|
| Module 10 (Mpa) | 0,84 | 0,9 | 1,00 | 0,87 |
| Module 100 (Mpa) | 1,49 | 3,21 | 5,19 | 3,49 |
| Module 200 (Mpa) | 2,64 | 7,8 | 15,06 | 10,25 |
| Module 300 (Mpa) | 4,62 | 13,38 | - | 18,55 |
| Résistance rupture (Mpa) | 20 | 28,2 | 16,8 | 28,3 |
| Allongement à la rupture (%) | 685 | 551 | 215 | 430 |
| I.R. = 200/100 | 1,7 | 2,43 | 2,9 | 2,94 |
| I. R. = 300/100 | 3,10 | 4,17 | - | 5,32 |
| Dureté Shore A-15s (pts) | 54 | 66 | 67 | 64 |
| Perte par abrasion 10N (mm³) | 229 | 77 | 46 | 57 |

### 5) Propriétés dynamiques des vulcanisats :

Les propriétés mécaniques sont mesurées sur un viscoanalyseur (Metravib VA3000), selon la norme ASTM D5992.

Les valeurs de facteur de perte (tan δ) et de module complexe en compression dynamique (E*) sont enregistrées sur des échantillons vulcanisés (éprouvette cylindrique de section 95 mm² et de hauteur 14 mm). L'échantillon est soumis au départ à une prédéformation de 10% puis à une déformation sinusoïdale en compression alternée de plus ou moins 2%. Les mesures sont réalisées à 60°C et à une fréquence de 10 Hz.

Les résultats, présentés dans le tableau IV, sont le module complexe en compression (E* - 60°C - 10 Hz) et le facteur de perte (tan δ - 60°C - 10 Hz).

Les valeurs du facteur de perte (tan δ) et d'amplitude de module élastique en cisaillement dynamique (ΔG') sont enregistrées sur des échantillons vulcanisés (éprouvette parallélépipédique de section 8 mm² et de hauteur 7 mm). L'échantillon est soumis à une déformation sinusoïdale en double cisaillement alternée à une température de 40°C et à une fréquence de 10 Hz. Les processus de balayage en amplitude de déformations s'effectue selon un cycle aller-retour, allant de 0,1% à 50% puis retour de 50% à 0,1%.

Les résultats présentés dans le tableau IV, sont issus du balayage en amplitude de déformations au retour et concernent la valeur maximale du facteur de perte (tan δ max retour - 40°C - 10 Hz) ainsi que l'amplitude du module élastique (ΔG' - 40°C - 10 Hz) entre les valeurs à 0,1% et 50% de déformation (effet Payne).

**Tableau IV**

| Référence | Témoin 1 | Témoin 2 | Témoin 3 | Exemple 2 |
|---|---|---|---|---|
| E* - 60°C - 10 Hz (MPa) | 9,04 | 8,60 | 8,90 | 7,85 |
| Tang δ - 60°C - 10 Hz | 0,145 | 0,087 | 0,070 | 0,067 |
| Tang δ max retour - 40°C - 10 Hz | 0,176 | 0,134 | 0,094 | 0,098 |
| ΔG'- 40°C - 10 Hz (MPa) | 3,15 | 1,71 | 1,04 | 1,06 |

L'examen des différents tableaux II à IV montre que la composition conforme à l'invention (exemple 2) permet d'améliorer le compromis renforcement aux grandes déformations / propriétés ultimes en traction / propriétés hystérétiques par rapport à ce qui est obtenu avec les compositions témoins (témoins 1 à 3). La composition de l'invention révèle en particulier une hystérèse très sensiblement améliorée comme démontré dans le tableau IV par la valeur du facteur de perte (tang δ) à 60 °C qui est sensiblement diminuée.

## Revendications

1. Utilisation :
→ d'une quantité efficace d'un système polyfonctionnel (A) de couplage (charge inorganique - élastomère), porteur d'au moins deux fonctions notées "X" ou "Y", greffable d'une part sur l'élastomère au moyen de la fonction "X" et d'autre part sur la charge inorganique au moyen de la fonction "Y" ;
→ comme agent de couplage charge inorganique - élastomère dans les compositions de caoutchouc comprenant :
◆ (B) au moins un élastomère de type caoutchouc, naturel ou synthétique ;
◆ (C) une charge inorganique à titre de charge renforçante ;
◆ (D) tout ou partie des autres constituants ou additifs choisis parmi : un (ou des) agent(s) de vulcanisation (D1), éventuellement un (ou des) accélérateur(s) de vulcanisation (D2), éventuellement un (ou des) activateur(s) de vulcanisation (D3), éventuellement une (ou des) charge(s) renforçante(s) non-blanche(s) (D4), éventuellement une (ou des) charge(s) inorganique(s) peu ou non renforçante(s) (D5), éventuellement un (ou des) agent(s) protecteur(s) (D6), éventuellement un (ou des) agent(s) de plastification et/ou un (ou des) agent(s) d'aide à la mise en oeuvre (D7), et des mélanges de ces espèces ;
→ ladite utilisation étant **caractérisée en ce que** :
+ le système polyfonctionnel de couplage (A) consiste dans une association particulière résidant dans la combinaison des ingrédients (A1) et (A2) suivants :
◆ (A1) étant au moins un agent de couplage choisi parmi le groupe des agents de couplage dont chaque membre est un composé constitué essentiellement d'un composé organosilicique fonctionnalisé (I) comprenant les motifs de formules générales suivantes :
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)
dans lesquelles :
- m, n, o, p représentent chacun un nombre entier ou fractionnaire égal ou supérieur à 0;
- q représente un nombre entier ou fractionnaire égal ou supérieur à 1 ;
- a représente un nombre entier choisi parmi 0,1, 2 et 3 ;
- a' représente un nombre entier choisi parmi 0, 1 et 2 ;
- la somme a + a' se situe dans l'intervalle allant de 0 à 3 avec les conditions selon lesquelles : quand a = 0, alors au moins un des symboles G⁰ répond à la définition donnée ci-après pour G²; et quand a + a' = 3, alors m = n = o = p = 0 (zéro) ;
- les symboles G⁰, identiques ou différents, représentent chacun l'un des groupes correspondant à G² ou G¹ ;
- les symboles G², identiques ou différents, représentent chacun : un groupe hydroxyle ou un groupe monovalent hydrolysable ;
- les symboles G¹, identiques ou différents, représentent chacun : un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ; avec la possibilité complémentaire selon laquelle, le cas échéant, un groupe G¹ peut former avec un groupe G² et l'atome de silicium auquel G¹ et G² sont liés, un groupe carbocyclique monocyclique ou polycyclique ayant de 2 à 10 atomes de carbone cyclique et pouvant comporter un ou plusieurs hétéroatome(s) cyclique(s) oxygéné(s) ;
- le symbole Z représente un radical divalent choisi parmi : un groupe hydrocarboné aliphatique, saturé ou insaturé ; un groupe carbocyclique, saturé, insaturé et/ou aromatique, monocyclique ou polycyclique ; et un groupe présentant une partie hydrocarbonée aliphatique, saturée ou insaturée et une partie carbocyclique telle que définie ci-dessus ; ledit radical divalent étant éventuellement substitué ou interrompu par un atome d'oxygène et/ou un atome de soufre et/ou un atome d'azote, ledit atome d'azote portant 1 groupemonovalent choisi parmi : un atome d'hydrogène ; un atome hydrocarboné aliphatique, saturé ou insaturé ; un groupe carbocyclique, saturé ou insaturé et/ou aromatique, monocyclique ou polycyclique ; et un groupe présentant une partie hydrocarbonée aliphatique, saturée ou insaturée et une partie carbocyclique telle que définie ci-dessus ;
- le symbole A représente :
+ un groupe hydrocarboné aliphatique, saturé ou insaturé ; un groupe carbocyclique, saturé ou insaturé et/ou aromatique, monocyclique ou polycyclique ; ou un groupe représentant une partie hydrocarbonée aliphatique, saturée ou insaturée et une partie carbocyclique telle que définie ci-dessus ;
+ un groupe -X-G³ où : X représente -O-, -S- ou -NG⁴- avec G⁴ prenant l'une quelconque des significations données ci-avant pour G¹ ; G³, identique ou différent de G⁴, représente l'un quelconques des groupes définis pour G¹; les substituants G³ et G⁴ du groupe -NG⁴G³ pouvant, en outre, former ensemble et avec l'atome d'azote auquel ils sont liés un cycle unique ayant de 5 à 7 chaînons, comportant dans le cycle 3 à 6 atomes de carbone, 1 ou 2 atome(s) d'azote et éventuellement 1 ou 2 double(s) liaison(s) insaturée(s) ;
+ ou, lorsque q = 1, un groupe [-Z-SiO_{(3-a-a')/2}(G²)ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ dans lequel les symboles Z, G¹, G², a, a', m, n, o, et p possèdent les définitions indiquées ci-avant ;
◆ (A2): étant au moins un agent de couplage choisi dans le groupe des agents de couplage dont chaque membre est un composé constitué essentiellement :
• soit par un silane polysulfuré "symétrique" (A2-1) répondant à la formule générale :
(G⁶)_{b}(G⁵)_{3-b}Si-M-(Sₓ-M)ₘ-Si(G⁵)_{3-b}(G⁶)_{b} (II)
dans laquelle :
- les symboles G⁶ prennent l'une quelconque des significations données ci-avant pour G² ;
- les symboles G⁵ prennent l'une quelconque des significations données ci-avant pour G¹ ;
- b représente un nombre entier parmi 1, 2 et 3 ;
- m représente un nombre entier égal à 1 ou 2 ;
- x représente un nombre entier ou fractionnaire allant de 2 à 6 ;
- les symboles M prennent l'une quelconque des significations données ci-avant pour Z ;
• soit par un silane sulfuré "disymétrique" (A2-2) répondant à la formule générale :
(G⁶)_{b}(G⁵)_{3-b}Si-M-S_{z}-J (III)
dans laquelle :
- les symboles G⁶, G⁵, b et M répondent aux définitions données ci-avant pour la formule (II) ;
- z représente un nombre entier ou fractionnaire allant de 1 à 4 ;
- le symbole J représente :
+ lorsque z = 1 : un atome d'hydrogène ou un groupe -CO-R¹ ;
+ lorsque z est un nombre entier fractionnaire allant de 2 à 4 : un groupe -NR²R³ ou un groupe Bzt ou un groupe Bzt, (AA)y ;
+ avec : R1 étant un groupe hydrocarboné aliphatique, saturé ou insaturé, ou un groupe carbocyclique, saturé, insaturé et/ou aromatique, monocyclique ou polycyclique, ou un groupe présentant une partie hydrocarbonée aliphatique, saturée ou insaturée et une partie carbocyclique telle que définie ci-dessus ; R² et R³, identiques ou différents, étant un atome d'hydrogène et/ou l'un quelconque des groupes que représente R¹ ; R² et R³ pouvant en outre former ensemble et avec l'atome d'azote auquel ils sont liés, un cycle unique ayant de 5 à 7 chaînons, comportant dans le cycle 3 à 6 atomes de carbone, 1 ou 2 atome(s) d'azote et éventuellement 1 ou 2 double(s) liaison(s) ; le symbole Bzt représentant le groupe 2-benzothiazole éventuellement substitué par u ou plusieurs radicaux choisis parmi : un groupe hydrocarboné aliphatique saturé, ou un groupe carbocyclique saturé et/ou aromatique, monocyclique ou polycyclique, ou un groupe présentant une partie hydrocarbonée aliphatique saturée et une partie carbocyclique saturée et/ou aromatique, monocyclique ou polycyclique ; le symbole AA représentant un monoacide ou polyacide, organique ou minéral, oxygéné, dont l'une au moins des fonctions acides possède une constante d'ionisation dans l'eau, pKa, à 25°C, supérieure à 3 ; et y étant un nombre entier ou fractionnaire différent de 0 (zéro) et au plus égal à 3 ;
+ ledit système polyfonctionnel de couplage (A) est incorporé dans des compositions de caoutchouc à base d'élastomères isopréniques.

2. Utilisation selon la revendication 1, **caractérisée en ce que** les ingrédients (A1) sont choisis parmi le groupe des agents de couplage dont chaque membre est un composé organosilicique constitué essentiellement d'un composé :
➢ consistant dans :
■ (i) des organosilanes fonctionnalisés correspondant à la formule (I) dans laquelle : a+a'=3;m=n=o=p=0 (zéro); et q=1 ;
■ (2i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
■ (3i) des mélanges d'espèce(s) (i) et/ou (2i) ;
➢ et dans les structures desquels :
■ les symboles G⁰, identiques ou différents, représentent chacun l'un des radicaux choisis ci-après pour G¹ ou G² ;
■ les symboles G¹, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G², identiques ou différents, représentent chacun : un radical hydroxyle, un radical alkoxy, linéaire ou ramifié, en C₁-C₈, éventuellement substitué par un ou plusieurs (C₁-C₈)alkoxy ;
■ Z représente le radical divalent -Z'-Z"- où :
- Z' représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
- Z" représente : un lien valenciel, -O- ou -NR⁴-, avec R⁴ étant : un atome d'hydrogène ; un radical alkyle, linéaire ou ramifié, en C₁-C₈ ; un radical cycloalkyle en C₅C₁₀ ; un radical aryle en C₆-C₁₈ ; ou un radical (C₆-C₁₈)aryl-(C₁-C₈)alkyle ;
■ A désigne un groupe -O-G³ ou -NG⁴G³ où G³ et G⁴, identiques ou différents entre eux, représentent chacun : un radical alkyle, linéaire ou ramifié, en C₁-C₈ ; un radical cycloalkyle en C₅ C₁₀ ou un radical aryle en C₆-C₁₈.

3. Utilisation selon l'une des revendications 1 et 2, **caractérisée en ce que** les ingrédients (A1) sont choisis parmi le groupe des agents de couplage dont chaque membre est un composé organosilicique constitué essentiellement d'un composé :
➢ consistant dans :
■ (i) des organosilanes fonctionnalisés correspondant à la formule (I) dans laquelle : a + a' = 3 ; m = n = o = p = 0 (zéro) ; et q = 1 ;
■ (2i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
■ (3i) des mélanges d'espèce(s) (i) et/ou (2i) ;
➢ et dans les structures desquels :
■ les symboles G⁰, identiques ou différents, représentent chacun l'un des radicaux choisis ci-après pour G¹ ou G² ;
■ les symboles G¹, identiques ou différents, sont choisis dans le groupe formé par les radicaux méthyle, éthyle, propyle, isopropyle, cyclohexyle et phényle ;
■ les symboles G², identiques ou différents, sont choisis dans le groupe formé par les radicaux hydroxyle, méthoxy, éthoxy, n-propoxy, isopropoxy, n-butoxy, méthoxyméthoxy, éthoxyéthoxy et méthoxyéthoxy ;
■ Z représente le radical divalent -Z'-Z"- où :
- Z' représente : une chaîne alkylène en C₁-C₈ ;
- Z" représente : un lien valenciel, -O- ou -NR⁴-, avec R⁴ étant choisi dans le groupe formé par : l'hydrogène, les radicaux méthyle, éthyle, propyle, isopropyle, n-butyle, isobutyle, t-butyle, pentyle, hexyle, cyclohexyle, et benzyle ;
■ A désigne un groupe -O-G³ ou -NG⁴G³ où G³ et G⁴, identiques ou différents entre eux, sont choisis dans le groupe formé par les radicaux méthyle, éthyle, propyle, isopropyle, cyclohexyle et phényle.

4. Utilisation selon l'une des revendications 1 à 3, **caractérisée en ce que** les ingrédients (A1) sont choisis parmi le groupe des agents de couplage dont chaque membre est un composé organosilicique constitué essentiellement d'un composé :
➢ consistant dans :
■ (i) des organosilanes fonctionnalisés correspondant à la formule (I) dans laquelle : a + a' = 3 ; m = n = o = p = 0 (zéro) ; et q = 1 ;
■ (2i) des oligomères siloxanes fonctionnalisés correspondant à la formule (I) dans laquelle : a + a' = 1 ou 2 ; m se situe dans l'intervalle allant de 1 à 2 ; n = p = o = 0 (zéro) ; et q = 1 ;
■ (3i) des mélanges d'espèce(s) (i) et/ou (2i) ;
➢ et dans les structures desquels :
■ les symboles G⁰, identiques ou différents, représentent chacun l'un des radicaux choisis ci-après pour G¹ ou G² ;
■ les symboles G¹, identiques ou différents, sont choisis dans le groupe formé par les radicaux méthyle, éthyle, propyle, isopropyle, cyclohexyle et phényle ;
■ les symboles G², identiques ou différents, sont choisis dans le groupe formé par les radicaux hydroxyle, méthoxy, éthoxy, n-propoxy, isopropoxy et n-butoxy ;
■ Z représente le radical divalent -Z'-Z"- où :
- Z' est choisi dans le groupe formé par les radicaux divalents méthylène, éthylène et propylène ;
- Z" représente : un lien valenciel, -O- ou -NR⁴-, avec R⁴ étant un atome d'hydrogène ;
■ A désigne un groupe -O-G³ où G³ est choisi dans le groupe formé par les radicaux méthyle, éthyle, propyle, isopropyle, cyclohexyle et phényle.

5. Utilisation selon l'une des revendications 1 à 4, **caractérisée en ce que** les ingrédients (A2) sont choisis parmi le groupe des agents de couplage dont chaque membre est un composé constitué essentiellement d'un silane "symétrique" de formule (II) dans laquelle
■ b représente un nombre entier choisi parmi 1, 2 et 3 ;
■ les symboles G⁵, identiques ou différents, représentent chacun : un radical alkyle, linéaire ou ramifié, en C₁-C₈ ; un radical cycloalkyle en C₅-C₁₀ ou un radical aryle en C₆-C₁₈ ;
■ les symboles G⁶, identiques ou différents, représentent chacun : un radical hydroxyle, un radical alkoxy, linéaire ou ramifié, en C₁-C₈, éventuellement substitué par un ou plusieurs (C₁-C₈)alkoxy ;
■ M représente : une chaîne alkylène en C₁-C₈ ; un groupe cycloalkylène saturé en C₅-C₁₀ ; un groupe arylène en C₆-C₁₈ ; ou un groupe divalent constitué d'une combinaison d'au moins deux de ces radicaux ;
■ m est égal à 1 ;
■ x représente un nombre entier ou fractionnaire allant de 2 à 4.

6. Utilisation selon l'une des revendications 1 à 5, **caractérisée en ce que** les ingrédients (A2) sont choisis parmi le groupe des agents de couplage dont chaque membre est un composé constitué essentiellement d'un silane de formule (II) dans laquelle :
■ b représente un nombre entier choisi parmi 1, 2 et 3 ;
■ les symboles G⁵, identiques ou différents, sont choisis dans le groupe formé par les radicaux méthyle, éthyle, propyle, isopropyle, cyclohexyle et phényle ;
■ les symboles G⁶, identiques ou différents, sont choisis dans le groupe formé par les radicaux hydroxyle, méthoxy, éthoxy, n-propoxy, isopropoxy, n-butoxy, méthoxyméthoxy, éthoxyéthoxy et méthoxyéthoxy ;
■ M représente une chaîne alkylène en C₁-C₈ ;
■ m est égal à 1 ;
■ x représente un nombre entier ou fractionnaire allant de 2 à 4.

7. Utilisation selon l'une des revendications 1 à 6, **caractérisée en ce que** les ingrédients (A2) sont choisis parmi le groupe des agents de couplage dont chaque membre est un composé constitué essentiellement d'un silane de formule (II) dans laquelle :
■ b représente un nombre entier choisi parmi 1, 2 et 3 ;
■ les symboles G⁵, identiques ou différents, sont choisis dans le groupe formé par les radicaux méthyle, éthyle, propyle, isopropyle, cyclohexyle et phényle ;
■ les symboles G⁶, identiques ou différents, sont choisis dans le groupe formé par les radicaux hydroxyle, méthoxy, éthoxy, n-propoxy et isopropoxy ;
■ M est choisi dans le groupe formé par les radicaux divalents méthylène, éthylène et propylène ;
■ m est égal à 1 ;
■ x représente un nombre entier ou fractionnaire allant de 2 à 4.

8. Compositions d'élastomère(s) **caractérisées en ce qu'**elle comprennent :
(B) au moins un élastomère isoprénique,
(C) une charge inorganique renforçante, et
(A) une quantité adéquate du système de couplage consistant dans l'association particulière résidant dans la combinaison des ingrédients (A1) et (A2) définis dans l'une des revendications 1 à 7.

9. Compositions selon la revendication 8, **caractérisées en ce qu'**elles comprennent (les parties étant données en poids) :
• pour 100 parties d'élastomère(s) isoprénique(s),
• de 10 à 200 parties de charge inorganique (C),
• une quantité de combinaisons (A1) + (A2) qui apporte dans chaque composition :
- 0,5 à 15 parties d'ingrédient (A1), et
- 0,5 à 15 parties d'ingrédient (A2).

10. Compositions selon la revendication 9, **caractérisées en ce qu'**elles comprennent (les parties étant données en poids) :
• pour 100 parties d'élastomère(s) isoprénique(s),
• de 30 à 150 parties de charge inorganique (C),
• une quantité de combinaisons (A1) + (A2) qui apporte dans chaque composition :
- 1 à 10 parties d'ingrédient (A1), et
- 1 à 10 parties d'ingrédient (A2).

11. Compositions selon l'une des revendications 8 à 10, **caractérisées en ce que** le (ou les) élastomère(s) isoprénique(s) est (sont) choisi(s) parmi :
(1) les polyisoprènes de synthèse obtenus par homopolymérisation de l'isoprène ou méthyl-2 butadiène-1,3 ;
(2) les polyisoprènes de synthèse obtenus par copolymérisation de l'isoprène avec un ou plusieurs monomères insaturés éthyléniquement choisis parmi :
- (2.1) les monomères diènes conjuguées, autres que l'isoprène, ayant de 4 à 22 atomes de carbone ;
- (2.2) les monomères vinyles aromatiques ayant de 8 à 20 atomes de carbone ;
- (2.3) les monomères nitriles vinyliques ayant de 3 à 12 atomes de carbone ;
- (2.4) les monomères esters acryliques dérivés de l'acide acrylique ou de l'acide méthacrylique avec des alcanols ayant de 1 à 12 atomes de carbone ;
- (2.5) un mélange de plusieurs des monomères précités (2.1) à (2.4) entre eux ; les polyisoprènes copolymères contenant entre 99 % et 20 % en poids d'unités isopréniques et entre 1 % et 80 % en poids d'unités diéniques, vinyles aromatiques, nitriles vinyliques et/ou esters acryliques, et consistant par exemple dans le poly(isoprène-butadiène), le poly(isoprène-styrène) et le poly(isoprène-butadiène-styrène) ;
(3) le caoutchouc naturel ;
(4) les copolymères obtenus par copolymérisation d'isobutène et d'isoprène (caoutchouc butyle), ainsi que les versions halogénées, en particulier chlorées ou bromée, de ces copolymères ;
(5) un mélange de plusieurs des élastomères précités (1) à (4) entre eux ;
(6) un mélange contenant une quantité majoritaire allant de 51 % à 99,5 % en poids d'élastomère précité (1) ou (3) et une quantité minoritaire allant de 49 % à 0,5 % en poids) d'un ou plusieurs élastomères diéniques autres qu'isopréniques.

12. Compositions selon la revendication 11, **caractérisée en ce que** l'on fait appel à un ou plusieurs élastomères isopréniques choisis parmi : (1) les polyisoprènes de synthèse homopolymères ; (2) les polyisoprènes de synthèse copolymères consistant dans le poly(isoprène-butadiène), le poly(isoprène-styrène) et le poly(isoprène-butadiène-styrène) ; (3) le caoutchouc naturel ; (4) le caoutcouc butyle ; (5) un mélange des élastomères précités (1) à (4) entre eux ; (6) un mélange contenant une quantité majoritaire d'élastomère précité (1) ou (3) et une quantité minoritaire d'élastomère diénique autre qu'isoprénique consistant dans le polybutadiène, le polychloroprène, le poly(butadiène-styrène), le poly(butadiène-acrylonitrile) et un terpolymère (éthylène-propylène-diène monomère non conjugué).

13. Compositions selon l'une des revendications 8 à 12, **caractérisées en ce que** la charge inorganique renforçante consiste dans de la silice, prise seule ou en mélange avec de l'alumine.

14. Compositions selon la revendication 13, **caractérisées en ce que** :
■ la silice est une silice précipitée, par exemple présentant une surface spécifique BET inférieure ou égale à 450 m²/g,
■ l'alumine est une alumine hautement dispersible, par exemple présentant une surface spécifique BET allant de 30 à 400 m²/g et un taux élevé de fonction réactive de surface AI-OH.

15. Compositions selon l'une des revendications 8 à 14, **caractérisées en ce qu'**elles contiennent en outre tout ou partie d'autres constituants ou additifs auxiliaires comprenant :
■ s'agissant du système de vulcanisation :
- (D1) : à titre obligatoire, des agents de vulcanisation choisis parmi le soufre ou des composés donneurs de soufre ;
- (D2) : à titre facultatif, des accélérateurs de vulcanisation ;
- (D3) : à titre facultatif, des activateurs de vulcanisation ;
■ s'agissant d'autre(s) additif(s) :
- (D4) : à titre facultatif, une charge renforçante conventionnelle consistant dans le noir de carbone ;
- (D5) : à titre facultatif, une charge blanche conventionnelle peu ou non renforçante ;
- (D6) : à titre facultatif, des agents protecteurs ;
- (D7) : à titre facultatif, des agents de plastification et des agents d'aide à la mise en oeuvre.

16. Procédé de préparation des compositions d'élastomère(s) isoprénique(s) selon l'une des revendications 8 à 15, **caractérisé en ce qu'**il consiste à mettre en oeuvre les deux phases 1 et 2 suivantes :
• phase 1 : on introduit et malaxe dans un mélangeur interne, en une ou plusieurs étapes, tous les ingrédients nécessaires, à l'exception généralement du (ou des) agent(s) de vulcanisation, en opérant à une température de 40 à 200°C ;
• phase 2 : puis le mélange ainsi obtenu est repris sur un mélangeur externe et on y ajoute alors le (ou les) agent(s) de vulcanisation et éventuellement un ou plusieurs autre(s) ingrédient(s), en opérant à une température plus basse, inférieure à 120°C.

17. Procédé selon la revendication 16, **caractérisé en ce que** :
• l'agent de couplage (A2) est introduit en totalité au cours de la phase 1 en même temps que la charge inorganique renforçante ;
• l'agent de couplage (A1) est:
- soit introduit en totalité au cours de la phase 1,
- soit introduit en totalité au cours de la phase 2,
- soit fractionné entre les deux phases 1 et 2, la première fraction incorporée en phase 1 correspondant à une proportion de 10 à 80% en poids, la seconde fraction incorporée en phase 2 correspondant à une proportion de 90 à 20% en poids.

18. Articles en élastomère(s), **caractérisés en ce qu'**ils possèdent un corps comprenant une composition selon l'une des revendications 8 à 15.

19. Articles selon la revendication 18, **caractérisés en ce qu'**ils consistent dans des supports de moteurs, des semelles de chaussures, des galets de téléphériques, des joints d'appareillages électroménagers et des gaines de câbles.

## Claims

1. The use :
→ of an effective amount of a polyfunctional coupling system (A) (inorganic filler - elastomer), having at least two functions noted "X" or "Y", which may be grafted on the one hand onto the elastomer by means of the function "X", and on the other hand onto the inorganic filler by means of the function "Y";
→ as inorganic filler - elastomer coupling agent in rubber compositions comprising:
◆ (B) at least one elastomer of natural or synthetic rubber type;
◆ (C) an inorganic filler as reinforcing filler;
◆ (D) all or part of the other constituents or additives chosen from: one (or more) curing agent(s) (D1), optionally one (or more) curing accelerator(s) (D2), optionally one (or more) curing activator(s) (D3), optionally one (or more) non-white reinforcing filler(s) (D4), optionally one (or more) non-reinforcing or sparingly reinforcing inorganic filler(s) (D5), optionally one (or more) protecting agent(s) (D6), optionally one (or more) plasticizer(s) and/or one (or more) implementation aid(s) (D7), and mixtures of these species;
→ said use being **characterized in that**:
+ the polyfunctional coupling system (A) consists of a particular combination residing in the combination of the ingredients (A1) and (A2) below:
◆ (A1) being at least one coupling agent chosen from the group of coupling agents in which each member is a compound constituted essentially of a functionalized organosilicon compound (I) comprising the units having the following general formulae:
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)
in which:
- m, n, o and p each represent an integer or fraction greater than or equal to 0;
- q represents an integer or fraction greater than or equal to 1;
- a represents an integer chosen from 0, 1, 2 and 3;
- a' represents an integer chosen from 0, 1 and 2;
- the sum a + a' is in the range from 0 to 3, with the conditions according to which: when a = 0, then at least one of the symbols G° corresponds to the definition given below for G²; and when a + a' = 3, then m = n = o = p = 0 (zero);
- the symbols G⁰, which may be identical or different, each represent one of the groups corresponding to G² or G¹;
- the symbols G², which may be identical or different, each represent: a hydroxyl group or a hydrolyzable monovalent group;
- the symbols G¹, which may be identical or different, each represent: a saturated or unsaturated aliphatic hydrocarbon-based group; a saturated or unsaturated and/or aromatic, monocyclic or polycyclic carbocyclic group; or a group representing a saturated or unsaturated aliphatic hydrocarbon-based part and a carbocyclic part as defined above; with the additional possibility according to which, where appropriate, a group G¹ may form, with a group G² and the silicon atom to which G¹ and G² are attached, a monocyclic or polycyclic carbocyclic group containing from 2 to 10 ring carbon atoms and possibly comprising one or more ring oxygen heteroatom(s);
- the symbol Z represents a divalent radical chosen from: a saturated or unsaturated aliphatic hydrocarbon-based group; a saturated, unsaturated and/or aromatic, monocyclic or polycyclic carbocyclic group; and a group containing a saturated or unsaturated aliphatic hydrocarbon-based part and a carbocyclic part as defined above; said divalent radical being optionally substituted or interrupted with an oxygen atom and/or a sulfur atom and/or a nitrogen atom, said nitrogen atom bearing one monovalent group chosen from: a hydrogen atom; a saturated or unsaturated aliphatic hydrocarbon-based atom; a saturated or unsaturated and/or aromatic, monocyclic or polycyclic carbocyclic group; and a group containing a saturated or unsaturated aliphatic hydrocarbon-based part and a carbocyclic part as defined above;
- the symbol A represents:
+ a saturated or unsaturated aliphatic hydrocarbon-based group; a saturated or unsaturated and/or aromatic, monocyclic or polycyclic carbocyclic group; or a group representing a saturated or unsaturated aliphatic hydrocarbon-based part and a carbocyclic part as defined above;
+ a group -X-G³ in which: X represents -O-, -S-or -NG⁴- with G⁴ taking any of the meanings given above for G¹; G³, which may be identical to or different from G⁴, represents any of the groups defined for G¹; the substituents G³ and G⁴ of the group -NG⁴G³ also possibly forming, together with the nitrogen atom to which they are attached, a single 5- to 7-membered ring comprising in the ring from 3 to 6 carbon atoms, 1 or 2 nitrogen atom(s) and optionally 1 or 2 unsaturated double bond(s);
+ or, when q = 1, a group [-Z-SiO_{(3-a-a')/2} (G²) ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ in which the symbols Z, G¹, G², a, a¹, m, n, o and p have the definitions given above;
◆ (A2) being at least one coupling agent chosen from the group of coupling agents in which each member is a compound constituted essentially:
• either of a polysulfur-containing "symmetrical" silane (A2-1) conforming to the general formula:
(G⁶)_{b}(G⁵)_{3-b}Si-M-(Sₓ-M)ₘ-Si(G⁵)_{3-b}(G⁶)_{b} (II)
in which:
- the symbols G⁶ adopt any one of the meanings given above for G²;
- the symbols G⁵ adopt any one of the meanings given above for G¹;
- b represents an integer 1, 2 or 3;
- m represents an integer 1 or 2;
- x represents a whole or fractional number ranging from 2 to 6;
- the symbols M adopt any one of the meanings give above for Z;
• or of a sulfur-containing "asymmetric" silane (A2-2) conforming to the general formula:
(G⁶)_{b}(G⁵)_{3-b}Si-M-S_{z}-J (III)
in which:
- the symbols G⁶, G⁵, b and M conform to the definitions given above for the formula (II);
- z represents a whole or fractional number ranging from 1 to 4;
- the symbol J represents:
+ when z = 1: a hydrogen atom or a group -CO-R¹;
+ when z is a whole or fractional number ranging from 2 to 4: a group -NR²R³ or a group Bzt or a group Bzt, (AA) y;
+ with: R¹ being a saturated or unsaturated aliphatic hydrocarbon-based group, or a saturated, unsaturated and/or aromatic, monocyclic or polycyclic carbocyclic group, or a group having a saturated or unsaturated aliphatic hydrocarbon-based part and a carbocyclic part as defined above; R² and R³, which are identical or different, being a hydrogen atom and/or any one of the groups represented by R¹; R² and R³ further being able to form, together and with the nitrogen atom to which they are attached, a single ring having 5 to 7 members, containing within the ring 3 to 6 carbon atoms, 1 or 2 nitrogen atom(s) and optionally 1 or 2 double bond(s); the symbol Bzt representing the 2-benzothiazole group optionally substituted by one or more radicals chosen from: a saturated aliphatic hydrocarbon-based group, or a saturated and/or aromatic, monocyclic or polycyclic carbocyclic group, or a group having a saturated aliphatic hydrocarbon-based part and a saturated and/or aromatic, monocyclic or polycyclic carbocyclic part; the symbol AA representing an organic or inorganic, oxygen-containing monoacid or polyacid at least one of whose acid functions possesses an ionization constant in water, pKa, at 25°C, of more than 3; and y being a whole or fractional number other than 0 (zero) and not greater than 3;
+ said polyfunctional coupling system (A) is incorporated into rubber compositions based on isoprene elastomers.

2. The use as claimed in claim 1, **characterized in that** the ingredients (A1) are chosen from the group of coupling agents for which each member is an organosilicon compound consisting essentially of a compound:
➢ consisting of:
■ (i) functionalized organosilanes corresponding to formula (I) in which: a + a' - 3; m = n = o = p = 0 (zero); and q = 1;
■ (2i) functionalized siloxane oligomers corresponding to formula (I) in which: a + a' = 1 or 2; m is in the range from 1 to 2; n = p = o = 0 (zero); and q = 1;
■ (3i) mixtures of species (i) and/or (2i);
➢ and of the structures for which:
■ the symbols G⁰, which may be identical or different, each represent one of the radicals chosen below for G¹ or G²;
■ the symbols G¹, which may be identical or different, each represent: a linear or branched C₁-C₈ alkyl radical; a C₅-C₁₀ cycloalkyl radical or a C₆-C₁₈ aryl radical;
■ the symbols G², which may be identical or different, each represent: a hydroxyl radical or a linear or branched C₁-C₈ alkoxy radical, optionally substituted with one or more (C₁-C₈)alkoxy radicals;
■ Z represents the divalent radical -Z'-Z"- in which:
- Z' represents: a C₁-C₈ alkylene chain; a saturated C₅-C₁₀ cycloalkylene group; a C₆-C₁₈ arylene group; or a divalent group consisting of a combination of at least two of these radicals;
- Z" represents: a valency bond, -O- or -NR⁴-, with R⁴ being: a hydrogen atom; a linear or branched C₁-C₈ alkyl radical; a C₅-C₁₀ cycloalkyl radical; a C₆-C₁₈ aryl radical; or a (C₆-C₁₈) aryl- (C₁-C₈) alkyl radical;
■ A denotes a group -O-G³ or -NG⁴G³ in which G³ and G⁴, which may be identical or different, each represent: a linear or branched C₁-C₈ alkyl radical; a C₅-C₁₀ cycloalkyl radical or a C₆-C₁₈ aryl radical.

3. The use as claimed in either of claims 1 and 2, **characterized in that** the ingredients (A1) are chosen from the group of coupling agents for which each member is an organosilicon compound constituted essentially of a compound:
➢ consisting of:
■ (i) functionalized organosilanes corresponding to formula (I) in which: a + a' = 3; m = n = o = p = 0 (zero); and q = 1;
■ (2i) functionalized siloxane oligomers corresponding to formula (I) in which: a + a' = 1 or 2; m is in the range from 1 to 2; n = p = o = 0 (zero); and q = 1;
■ (3i) mixtures of species (i) and/or (2i);
➢ and of the structures for which:
■ the symbols G⁰, which may be identical or different, each represent one of the radicals chosen below for G¹ or G²;
■ the symbols G¹, which may be identical or different, are chosen from the group formed by methyl, ethyl, propyl, isopropyl, cyclohexyl and phenyl radicals;
■ the symbols G², which may be identical or different, are chosen from the group formed by hydroxyl, methoxy, ethoxy, n-propoxy, isopropoxy, n-butoxy, methoxymethoxy, ethoxyethoxy and methoxyethoxy radicals;
■ Z represents the divalent radical -Z'-Z"- in which:
- Z' represents: a C₁-C₈ alkylene chain;
- Z" represents: a valency bond, -O- or -NR⁴-, with R⁴ being chosen from the group formed by : hydrogen and methyl, ethyl, propyl, isopropyl, n-butyl, isobutyl, t-butyl, pentyl, hexyl, cyclohexyl and benzyl radicals;
■ A denotes a group -O-G³ or -NG⁴G³ in which G³ and G⁴, which may be identical or different, are chosen from the group formed by methyl, ethyl, propyl, isopropyl, cyclohexyl and phenyl radicals.

4. The use as claimed in one of claims 1 to 3, **characterized in that** the ingredients (A1) are chosen from the group of coupling agents for which each member is an organosilicon compound constituted essentially of a compound:
➢ consisting of:
■ (i) functionalized organosilanes corresponding to formula (I) in which: a+a' = 3 ; m = n = o = p = 0 (zero); and q = 1;
■ (2i) functionalized siloxane oligomers corresponding to formula (I) in which: a + a' = 1 or 2; m is in the range from 1 to 2; n = p = o = 0 (zero); and q = 1;
■ (3i) mixtures of species (i) and/or (2i):
➢ and of the structures for which:
■ the symbols G⁰, which may be identical or different, each represent one of the radicals chosen below for G¹ or G² ;
■ the symbols G¹, which may be identical or different, are chosen from the group formed by methyl, ethyl, propyl, isopropyl, cyclohexyl and phenyl radicals;
■ the symbols G², which may be identical or different, are chosen from the group formed by hydroxyl, methoxy, ethoxy, n-propoxy, isopropoxy and n-butoxy radicals;
■ Z represents the divalent radical -Z'-Z"- in which :
- Z' is chosen from the group formed by the divalent radicals methylene, ethylene and propylene;
- Z" represents: a valency bond, -O- or -NR⁴-, with R⁴ being a hydrogen atom;
■ A denotes a group -O-G³ in which G³ is chosen from the group formed by methyl, ethyl, propyl, isopropyl, cyclohexyl and phenyl radicals.

5. The use as claimed in one of claims 1 to 4, **characterized in that** the ingredients (A2) are chosen from the group of coupling agents in which each member is a compound constituted essentially of a "symmetrical" silane of formula (II) in which
■ b represents an integer 1, 2 or 3;
■ the symbols G⁵, which are identical or different, each represent: a linear or branched C₁-C₈ alkyl radical; a C₅-C₁₀ cycloalkyl radical or a C₆-C₁₈ aryl radical;
■ the symbols G⁶, which are identical or different, each represent: a hydroxyl radical, a linear or branched C₁-C₈ alkoxy radical, optionally substituted by one or more (C₁-C₈) alkoxy radicals;
■ M represents: a C₁-C₈ alkylene chain; a saturated C₅-C₁₀ cycloalkylene group; C₆-C₁₈ arylene group; or a divalent group composed of a combination of at least two of these radicals;
■ m is 1;
■ x represents a whole or fractional number ranging from 2 to 4.

6. The use as claimed in one of claims 1 to 5, **characterized in that** the ingredients (A2) are chosen from the group of coupling agents in which each member is a compound constituted essentially of a silane of formula (II) in which:
■ b represents an integer 1, 2 or 3;
■ the symbols G⁵, which are identical or different, are chosen from the group formed by the methyl, ethyl, propyl, isopropyl, cyclohexyl and phenyl radicals;
■ the symbols G⁶, which are identical or different, are chosen from the group formed by the hydroxyl, methoxy, ethoxy, n-propoxy, isopropoxy, n-butoxy, methoxyethoxy, ethoxyethoxy and methoxyethoxy radicals;
■ M represents: a C₁-C₈ alkylene chain ;
■ m is 1 ;
■ x represents a whole or fractional number ranging from 2 to 4.

7. The use as claimed in one of claims 1 to 6, **characterized in that** the ingredients (A2) are chosen from the group of coupling agents in which each member is a compound constituted essentially of a silane of formula (II) in which:
■ b represents an integer 1, 2 or 3;
■ the symbols G⁵, which are identical or different, are chosen from the group formed by the methyl, ethyl, propyl, isopropyl, cyclohexyl and phenyl radicals;
■ the symbols G⁶, which are identical or different, are chosen from the group formed by the hydroxyl, methoxy, ethoxy, n-propoxy and isopropoxy radicals;
■ M is chosen from the group formed by the divalent methylene, ethylene and propylene radicals;
■ m is 1;
■ x represents a whole or fractional number ranging from 2 to 4.

8. An elastomeric composition, **characterized in that** it comprises:
(B) at least one isoprene elastomer,
(C) a reinforcing inorganic filler, and
(A) an adequate amount of the coupling system consisting of the particular combination residing in the combination of ingredients (A1) and (A2) defined in one of claims 1 to 7.

9. The composition as claimed in claim 8, **characterized in that** it comprises (the parts being given on a weight basis):
• per 100 parts of isoprene elastomer(s),
• from 10 to 200 parts of inorganic filler (C),
• an amount of combinations (A1) + (A2) that provides in each composition:
- 0.5 to 15 parts of ingredient (A1), and
- 0.5 to 15 parts of ingredient (A2).

10. The composition as claimed in claim 9, **characterized in that** it comprises (the parts being given on a weight basis):
• per 100 parts of isoprene elastomer(s),
• from 30 to 150 parts of inorganic filler (C), an amount of combinations (A1) + (A2) that provides in each composition:
- 1 to 10 parts of ingredient (A1), and
- 1 to 10 parts of ingredient (A2).

11. The composition as claimed in one of claims 8 to 10, **characterized in that** the isoprene elastomer(s) is (are) chosen from:
(1) the synthetic polyisoprenes obtained by homopolymerization of isoprene or 2-methyl-1,3-butadiene;
(2) the synthetic polyisoprenes obtained by copolymerization of isoprene with one or more ethylenically unsaturated monomers chosen from:
- (2.1) conjugated diene monomers, other than isoprene, containing from 4 to 22 carbon atoms;
- (2.2) aromatic vinyl monomers containing from 8 to 20 carbon atoms;
- (2.3) vinyl nitrile monomers containing from 3 to 12 carbon atoms;
- (2.4) acrylic ester monomers derived from acrylic acid or methacrylic acid with alkanols containing from 1 to 12 carbon atoms;
- (2.5) a mixture of several of the abovementioned monomers (2.1) to (2.4);
the polyisoprene copolymers containing between 99% and 20% by weight of isoprene units and between 1% and 80% by weight of diene, aromatic vinyl, vinyl nitrile and/or acrylic ester units, and consisting, for example, of poly(isoprene-butadiene), poly(isoprene-styrene) and poly(isoprene-butadiene-styrene);
(3) natural rubber;
(4) the copolymers obtained by copolymerization of isobutene and isoprene (butyl rubber), and also the halogenated versions, in particular the chlorinated or brominated versions, of these copolymers;
(5) a mixture of several of the abovementioned elastomers (1) to (4);
(6) a mixture containing a major amount ranging from 51% to 99.5% by weight of abovementioned elastomer (1) or (3) and a minor amount ranging from 49% to 0.5% by weight of one or more diene elastomers other than isoprene elastomers.

12. The composition as claimed in claim 11, **characterized in that** use is made of one or more isoprene elastomers chosen from: (1) synthetic polyisoprene homopolymers; (2) synthetic polyisoprene copolymers consisting of poly(isoprene-butadiene), poly(isoprene-styrene) and poly(isoprene-butadienestyrene); (3) natural rubber; (4) butyl rubber; (5) a mixture of the abovementioned elastomers (1) to (4); (6) a mixture containing a major amount of abovementioned elastomer (1) or (3) and a minor amount of diene elastomer other than isoprene elastomer consisting of polybutadiene, polychloroprene, poly(butadiene-styrene), poly(butadiene-acrylonitrile) and a terpolymer (non-conjugated ethylene-propylene-diene monomer).

13. The composition as claimed in one of claims 8 to 12, **characterized in that** the reinforcing inorganic filler consists of silica, taken alone or as a mixture with alumina.

14. The composition as claimed in claim 13, **characterized in that**:
■ the silica is a precipitated silica, for example having a BET specific surface area of less than or equal to 450 m²/g,
■ the alumina is a highly dispersible alumina, for example having a BET specific surface area ranging from 30 to 400 m²/g and a high content of reactive surface Al-OH functions.

15. The composition as claimed in one of claims 8 to 14, **characterized in that** it also contains all or some other auxiliary additives or constituents comprising:
■ as regards the curing system:
- (D1) : mandatorily, curing agents chosen from sulfur and sulfur-donating compounds;
- (D2): optionally, curing accelerators;
- (D3): optionally, curing activators;
■ as regards other additive(s):
- (D4): optionally, a conventional reinforcing filler consisting of carbon black;
- (D5): optionally, a sparingly reinforcing or non-reinforcing conventional white filler;
- (D6): optionally, protecting agents;
- (D7): optionally, plasticizers and implementation aids.

16. A process for preparing the isoprene elastomer composition as claimed in one of claims 8 to 15, **characterized in that** it consists in performing the following two phases 1 and 2:
• phase 1: all the necessary ingredients, with the exception generally of the curing agent(s), are introduced into and blended in an internal mixer, in one or more steps, working at a temperature of from 40 to 200°C ;
• phase 2: the mixture thus obtained is then taken up in an external mixer and the curing agent(s) and optionally one or more other ingredient(s) is (are) then added thereto, working at a lower temperature, below 120°C.

17. The process as claimed in claim 16, **characterized in that**:
• the coupling agent (A2) is introduced in total during phase 1 at the same time as the reinforcing inorganic filler;
• the coupling agent (A1) is:
- either totally introduced during phase 1,
- or totally introduced during phase 2,
- or split between the two phases 1 and 2, the first fraction incorporated in phase 1 corresponding to a proportion of from 10% to 80% by weight, the second fraction incorporated in phase 2 corresponding to a proportion of from 90% to 20% by weight.

18. An elastomeric article, **characterized in that** it has a body comprising a composition as claimed in one of claims 8 to 15.

19. The article as claimed in claim 18, **characterized in that** it consists of engine supports, shoe soles, rollers for cable cars, seals for electrical household appliances and cable sheaths.

## Patentansprüche

1. Verwendung
→ einer wirksamen Menge eines polyfunktionellen Kopplungssystems (A) (anorganischer Füllstoff - Elastomer), welches mindestens zwei als "X" oder "Y" bezeichnete Funktionen trägt, das einerseits auf das Elastomer mittels der Funktion "X" und andererseits auf den anorganischen Füllstoff mittels der Funktion "Y" aufpfropfbar ist;
→ als anorganischer Füllstoff-Elastomer-Kopplungsmittel in Kautschuk-Zusammensetzungen, umfassend
◆ (B) mindestens ein Elastomer vom Natur- oder Synthesekautschuk-Typ;
◆ (C) einen anorganischen Füllstoff als verstärkenden Füllstoff;
◆ (D) die Gesamtheit oder einen Teil von anderen Bestandteilen oder Additiven, die ausgewählt sind unter: einem (oder mehreren) Vulkanisationsmittel(n) (D1), gegebenenfalls einem (oder mehreren) Vulkanisationsbeschleuniger(n) (D2), gegebenenfalls einem (oder mehreren) Vulkanisationsaktivatoren (D3), gegebenenfalls einem (oder mehreren) verstärkenden, nicht-weißen Füllstoff(en) (D4), gegebenenfalls einem (oder mehreren) wenig oder nicht verstärkenden anorganischen Füllstoff(en) (D5), gegebenenfalls einem (oder mehreren) Schutzmittel(n) (D6), gegebenenfalls einem (oder mehreren) Weichmacher(n) und/oder einem (oder mehreren) Anwendungshilfsmittel(n) und Mischungen von diesen Spezies;
→ wobei die Verwendung **dadurch gekennzeichnet ist, dass**:
+ das polyfunktionelle Kopplungssystem (A) aus einer besonderen Assoziation, welche auf der Kombination der folgenden Inhaltsstoffe (A1) und (A2) beruht, besteht:
◆ (A1), welches mindestens ein Kopplungsmittel ist, welches ausgewählt ist in der Gruppe der Kopplungsmittel, von der jedes Mitglied eine Verbindung ist, die im Wesentlichen aus einer funktionalisierten siliciumorganischen Verbindung (I), die die Motive der folgenden allgemeinen Formeln umfasst, gebildet wird:
[(G⁰)₃SiO_{1/2}]ₘ [(G⁰)₂SiO_{2/2}]ₙ [G⁰SiO_{3/2}]ₒ [SiO_{4/2}]ₚ [(G²)ₐ(G¹)_{a'}(Z-CO-N=N-CO-A)SiO_{(3-a-a')/2}]_{q} (I)
in welchen:
- m, n, o, p jeweils für eine ganze Zahl oder eine Bruchzahl, die gleich oder höher als 0 ist, stehen;
- q für eine ganze Zahl oder Bruchzahl, die gleich oder höher als 1 ist, steht;
- a für eine ganze Zahl, die aus 0, 1, 2 und 3 ausgewählt ist, steht;
- a' für eine ganze Zahl, die aus 0, 1 und 2 ausgewählt ist, steht;
- die Summe a + a' in dem Intervall, welches von 0 bis 3 geht, liegt mit den Maßgaben, gemäß welchen: wenn a = 0, dann mindestens eines der Symbole G⁰ der nachfolgend für G² angegebenen Definition entspricht; und wenn a + a' = 3, dann sind m = n = o = p = 0 (Null);
- die Symbole G⁰, die gleich oder verschieden sind, jeweils für eine der G² oder G¹ entsprechenden Gruppen stehen;
- die Symbole G², die gleich oder verschieden sind, jeweils stehen für: eine Hydroxylgruppe oder eine einwertige hydrolysierbare Gruppe;
- die Symbole G¹, die gleich oder verschieden sind, jeweils stehen für: eine gesättigte oder ungesättigte aliphatische kohlenwasserstoffhaltige Gruppe; eine gesättigte oder ungesättigte und/oder aromatische monocyclische oder polycyclische carbocyclische Gruppe; oder eine Gruppe, welche einen gesättigten oder ungesättigten aliphatischen kohlenwasserstoffhaltigen Abschnitt und einen carbocyclischen Abschnitt, wie oben definiert, repräsentiert; mit der ergänzenden Möglichkeit, gemäß welcher gegebenenfalls eine Gruppe G¹ mit einer Gruppe G² und dem Siliciumatom, an welches G¹ und G² gebunden sind, eine monocyclische oder polycyclische carbocyclische Gruppe, welche 2 bis 10 cyclische Kohlenstoffatome aufweist und ein oder mehrere cyclische(s) oxygenierte(s) Heteroatom(e) umfassen kann, bilden kann;
- das Symbol Z einen zweiwertigen Rest repräsentiert, welcher ausgewählt ist unter: einer gesättigten oder ungesättigten kohlenwasserstoffhaltigen Gruppe; einer gesättigten, ungesättigten und/oder aromatischen monocyclischen oder polycyclischen carbocyclischen Gruppe; und einer Gruppe, welche einen gesättigten oder ungesättigten aliphatischen kohlenwasserstoffhaltigen Abschnitt und einen carbocyclischen Abschnitt, wie oben definiert, aufweist; wobei der zweiwertige Rest gegebenenfalls durch ein Sauerstoffatom und/oder ein Schwefelatom und/oder ein Stickstoffatom substituiert oder unterbrochen ist, wobei das Stickstoffatom 1 einwertige Gruppe trägt, die ausgewählt ist unter: einem Wasserstoffatom; einem gesättigten oder ungesättigten aliphatischen kohlenwasserstoffhaltigen Atom; einer gesättigten oder ungesättigten und/oder aromatischen monocyclischen oder polycyclischen carbocyclischen Gruppe; und einer Gruppe, welche einen gesättigten oder ungesättigten aliphatischen kohlenwasserstoffhaltigen Abschnitt und einen carbocyclischen Abschnitt, wie oben definiert, aufweist;
- das Symbol A steht für:
+ eine gesättigte oder ungesättigte kohlenwasserstoffhaltige Gruppe; eine gesättigte oder ungesättigte und/oder aromatische monocyclische oder polycyclische carbocyclische Gruppe; oder eine Gruppe, die einen gesättigten oder ungesättigten aliphatischen kohlenwasserstoffhaltigen Abschnitt und einen carbocyclischen Abschnitt, wie oben definiert, repräsentiert;
+ eine Gruppe -X-G³, worin: X für -O-, -S- oder -NG⁴- steht, wobei G⁴ irgendeine der vorstehend für G¹ angegebenen Bezeichnungen annimmt; G³, das identisch mit G⁴ oder von G⁴ verschieden ist, für irgendeine der für G¹ definierten Gruppen steht; wobei die Substitutenten G³ und G⁴ der Gruppe -NG⁴G³ außerdem zusammen und mit dem Stickstoffatom, an das sie gebunden sind, einen einzelnen Cyclus mit 5 bis 7 Ringgliedern, welcher in dem Cyclus 3 bis 6 Kohlenstoffatome, 1 oder 2 Stickstoffatom(e) und gegebenenfalls 1 oder 2 ungesättigte Doppelbindung(en) umfasst, bilden können;
+ oder, wenn q = 1, eine Gruppe [-Z-SiO_{(3-a-a')/2}(G²)ₐ(G¹)_{a'}] [(G⁰)₃SiO_{1/2}]ₘ [(G⁰)₂SiO_{2/2}]ₙ [G⁰SiO_{3/2}]ₒ [SiO_{4/2}]ₚ, in welcher die Symbole Z, G¹, G², a, a', m, n, o und p die oben angegebenen Definitionen aufweisen;
◆ (A2), welches mindestens ein Kopplungsmittel ist, das ausgewählt ist in der Gruppe der Kopplungsmittel, von der jedes Mitglied eine Verbindung ist, die im Wesentlichen besteht:
• entweder aus einem "symmetrischen" polysulfidischen Silan (A2-1), welches der allgemeinen Formel:
(G⁵)_{b}(G⁵)_{3-b}Si-M-(Sₓ-M)ₘ-Si(G⁵)_{3-b}(G⁶)_{b} (II)
entspricht,
in welcher:
- die Symbole G⁶ irgendeine der oben für G² angegebenen Bezeichnungen annehmen;
- die Symbole G⁵ irgendeine der oben für G¹ angegebenen Bezeichnungen annehmen;
- b für eine ganze Zahl aus 1, 2 und 3 steht;
- m für eine ganze Zahl gleich 1 oder 2 steht;
- x für eine ganze Zahl oder Bruchzahl, welche von 2 bis 6 geht, steht;
- die Symbole M irgendeine der oben für Z angegebenen Bedeutungen annehmen;
• oder aus einem "unsymmetrischen" sulfidischen Silan (A2-2), welches der allgemeinen Formel:
(G⁶)_{b}(G⁵)_{3-b}Si-M-S_{z}-J (III),
entspricht,
in welcher:
- die Symbole G⁶, G⁵, b und M den oben für die Formel (II) angegebenen Definitionen entsprechen;
- z für eine ganze Zahl oder Bruchzahl, die von 1 bis 4 geht, steht;
- das Symbol J steht für:
+ wenn z = 1: ein Wasserstoffatom oder eine Gruppe -CO-R¹;
+ wenn z eine ganze Zahl oder Bruchzahl, die von 2 bis 4 geht, ist: eine Gruppe -NR²R³ oder eine Gruppe Bzt oder eine Gruppe Bzt, (AA)y;
+ mit: R¹, das eine gesättigte oder ungesättigte aliphatische kohlenwasserstoffhaltige Gruppe oder eine gesättigte, ungesättigte und/oder aromatische monocyclische oder polycyclische carbocyclische Gruppe oder eine Gruppe, welche einen gesättigten oder ungesättigten aliphatischen kohlenwasserstoffhaltigen Abschnitt und einen carbocyclischen Abschnitt, wie oben definiert, aufweist, ist; R² und R³, die gleich oder verschieden sind, die ein Wasserstoffatom und/oder irgendeine der Gruppen, die für R¹ stehen, sind; wobei R² und R³ außerdem zusammen und mit dem Stickstoffatom, an das sie gebunden sind, einen einzelnen Cyclus, welcher 5 bis 7 Ringglieder aufweist, welcher in dem Cyclus 3 bis 6 Kohlenstoffatome, 1 oder 2 Stickstoffatom(e) und gegebenenfalls 1 oder 2 Doppelbindung(en) umfasst, bilden können; wobei das Symbol Bzt für die 2-Benzothiazolgruppe steht, die gegebenenfalls substituiert ist durch einen oder mehrere Reste, die ausgewählt sind unter: einer gesättigten aliphatischen kohlenwasserstoffhaltigen Gruppe oder einer gesättigten und/oder aromatischen monocyclischen oder polycyclischen carbocyclischen Gruppe oder einer Gruppe, welche einen gesättigten aliphatischen kohlenwasserstoffhaltigen Abschnitt und einen gesättigten und/oder aromatischen monocyclischen oder polycyclischen carbocyclischen Abschnitt aufweist; wobei das Symbol AA für eine organische oder anorganische, sauerstoffhaltige Monosäure oder Polysäure steht, von der mindestens eine der Säurefunktionen eine Ionisierungskonstante in Wasser, pKa, bei 25°C über 3 aufweist; und wobei y eine ganze Zahl oder Bruchzahl, die von 0 (Null) verschieden und höchstens 3 ist, ist;
+ das polyfunktionelle Kopplungssystem (A) in Kautschuk-Zusammensetzungen auf der Grundlage von isoprenischen Elastomeren inkorporiert wird.

2. Verwendung nach Anspruch 1, **dadurch gekennzeichnet, dass** die Inhaltsstoffe (A1) ausgewählt sind aus der Gruppe der Kopplungsmittel, von der jedes Mitglied eine siliciumorganische Verbindung ist, die im Wesentlichen gebildet wird aus einer Verbindung:
➢ bestehend aus:
■ (i) funktionalisierten Organosilanen, die der Formel (I) entsprechen, in welcher: a + a' = 3; m = n = o = p = 0 (Null); und q = 1;
■ (2i) funktionalisierten Siloxan-Oligomeren, die der Formel (I) entsprechen, in welcher: a + a' = 1 oder 2; m in dem von 1 bis 2 gehenden Intervall liegt; n = p = o = 0 (Null); und q = 1;
■ (3i) Mischungen von einer oder mehreren Spezies (i) und/oder (2i);
➢ und in deren Strukturen:
■ die Symbole G⁰, die gleich oder verschieden sind, jeweils für einen der nachfolgend für G¹ oder G² ausgewählten Reste stehen;
■ die Symbole G¹, die gleich oder verschieden sind, jeweils stehen für: einen linearen oder verzweigten (C₁-C₈)-Alkylrest; einen (C₅-C₁₀)-Cycloalkylrest oder einen (C₆-C₁₈)-Arylrest;
■ die Symbole G², die gleich oder verschieden sind, jeweils stehen für: einen Hydroxylrest, einen linearen oder verzweigten (C₁-C₈)-Alkoxyrest, der gegebenenfalls durch ein oder mehrere (C₁-C₈)-Alkoxy substituiert ist;
■ Z für den zweiwertigen Rest -Z'-Z"- steht, worin:
- Z' steht für: eine (C₁-C₈)-Alkylenkette; eine gesättigte (C₅-C₁₀)-Cycloalkylengruppe; eine (C₆-C₁₈)-Arylengruppe; oder eine zweiwertige Gruppe, die aus einer Kombination von mindestens zwei von diesen Resten gebildet wird;
- Z" steht für: eine Valenzbindung, -O- oder -NR⁴, mit R⁴ , das: ein Wasserstoffatom; ein linearer oder verzweigter (C₁-C₈)-Alkylrest; ein (C₅-C₁₀)-Cycloalkylrest; ein (C₆-C₁₈)-Arylrest; oder ein (C₆-C₁₈)-Aryl-(C₁-C₈)-alkylrest ist;
■ A eine Gruppe -O-G³ oder -NG⁴G³ bezeichnet, worin G³ und G⁴, die untereinander gleich oder verschieden sind, jeweils stehen für: einen linearen oder verzweigten (C₁-C₈)-Alkylrest; einen (C₅-C₁₀)-Cycloalkylrest oder einen (C₆-C₁₈)-Arylrest.

3. Verwendung nach einem der Ansprüche 1 und 2, **dadurch gekennzeichnet, dass** die Inhaltsstoffe (A1) ausgewählt sind aus der Gruppe der Kopplungsmittel, von der jedes Mitglied eine siliciumorganische Verbindung ist, die im Wesentlichen gebildet wird aus einer Verbindung:
➢ bestehend aus:
■ (i) funktionalisierten Organosilanen, die der Formel (I) entsprechen, in welcher: a + a' = 3; m = n = o = p = 0 (Null); und q = 1;
■ (2i) funktionalisierten Siloxan-Oligomeren, die der Formel (I) entsprechen, in welcher: a + a' = 1 oder 2; m in dem von 1 bis 2 gehenden Intervall liegt; n = p = o = 0 (Null); und q = 1;
■ (3i) Mischungen von einer oder mehreren Spezies (i) und/oder (2i);
➢ und in deren Strukturen:
■ die Symbole G⁰, die gleich oder verschieden sind, jeweils für einen der nachfolgend für G¹ oder G² ausgewählten Reste stehen;
■ die Symbole G¹, die gleich oder verschieden sind, in der aus den Methyl-, Ethyl-, Propyl-, Isopropyl-, Cyclohexyl- und Phenylresten gebildeten Gruppe ausgewählt sind;
■ die Symbole G², die gleich oder verschieden sind, in der aus den Hydroxyl-, Methoxy-, Ethoxy-, n-Propoxy-, Isopropoxy-, n-Butoxy-, Methoxymethoxy-, Ethoxyethoxy- und Methoxyethoxyresten gebildeten Gruppe ausgewählt sind;
■ Z für den zweiwertigen Rest -Z'-Z"- steht, worin:
- Z' steht für: eine (C₁-C₈)-Alkylenkette;
- Z" steht für: eine Valenzbindung, -O- oder -NR⁴, mit R⁴, das ausgewählt ist aus der Gruppe, die gebildet wird aus: Wasserstoff, den Methyl-, Ethyl-, Propyl-, Isopropyl-, n-Butyl-, Isobutyl-, tert.-Butyl-, Pentyl-, Hexyl-, Cyclohexyl- und Benzylresten;
■ A eine Gruppe -C-G³ oder -NG⁴G³ bezeichnet, worin G³ und G⁴, die untereinander gleich oder verschieden sind, in der aus den Methyl-, Ethyl-, Propyl-, Isopropyl-, Cyclohexyl- und Phenylresten gebildeten Gruppe ausgewählt sind.

4. Verwendung nach einem der Ansprüche 1 bis 3, **dadurch gekennzeichnet, dass** die Inhaltsstoffe (A1) ausgewählt sind aus der Gruppe der Kopplungsmittel, von der jedes Mitglied eine siliciumorganische Verbindung ist, die im Wesentlichen gebildet wird aus einer Verbindung:
➢ bestehend aus:
■ (i) funktionalisierten Organosilanen, die der Formel (I) entsprechen, in welcher: a + a' = 3; m = n = o = p = 0 (Null); und q = 1;
■ (2i) funktionalisierten Siloxan-Oligomeren, die der Formel (I) entsprechen, in welcher: a + a' = 1 oder 2; m in dem von 1 bis 2 gehenden Intervall liegt; n = p = o = 0 (Null); und q = 1;
■ (3i) Mischungen von einer oder mehreren Spezies (i) und/oder (2i);
➢ und in deren Strukturen:
■ die Symbole G⁰, die gleich oder verschieden sind, jeweils für einen der nachfolgend für G¹ oder G² ausgewählten Reste stehen;
■ die Symbole G¹, die gleich oder verschieden sind, in der aus den Methyl-, Ethyl-, Propyl-, Isopropyl-, Cyclohexyl- und Phenylresten gebildeten Gruppe ausgewählt sind;
■ die Symbole G², die gleich oder verschieden sind, in der aus den Hydroxyl-, Methoxy-, Ethoxy-, n-Propoxy-, Isopropoxy- und n-Butoxyresten gebildeten Gruppe ausgewählt sind;
■ Z für den zweiwertigen Rest -Z'-Z"- steht, worin:
- Z' in der aus den zweiwertigen Methylen-, Ethylen- und Propylenresten gebildeten Gruppe ausgewählt ist;
- Z" steht für: eine Valenzbindung, -0- oder -NR⁴, mit R⁴, das ein Wasserstoffatom ist;
■ A eine Gruppe -O-G³ bezeichnet, worin G³ in der aus den Methyl-, Ethyl-, Propyl-, Isopropyl-, Cyclohexyl- und Phenylresten gebildeten Gruppe ausgewählt ist.

5. Verwendung nach einem der Ansprüche 1 bis 4, **dadurch gekennzeichnet, dass** die Inhaltsstoffe (A2) ausgewählt sind aus der Gruppe der Kopplungsmittel, von der jedes Mitglied eine Verbindung ist, die im Wesentlichen aus einem "symmetrischen" Silan der Formel (II) gebildet wird, in der:
■ b für eine ganze Zahl, die unter 1, 2 und 3 ausgewählt ist, steht;
■ die Symbole G⁵, die gleich oder verschieden sind, jeweils stehen für: einen linearen oder verzweigten (C₁-C₈)-Rest; einen (C₅-C₁₀)-Cycloalkylrest oder einen (C₈-C₁₈)-Arylrest;
■ die Symbole G⁶, die gleich oder verschieden sind, jeweils stehen für: einen Hydroxylrest, einen linearen oder verzweigten (C₁-C₈)-Alkoxyrest, der gegebenenfalls durch ein oder mehrere (C₁-C₈)-Alkoxy substituiert ist;
■ M für: eine (C₁-C₈)-Alkylenkette; eine gesättigte (C₅-C₁₀)-Cycloalkylengruppe; eine (C₆-C₁₈)-Arylengruppe; oder eine zweiwertige Gruppe, die aus einer Kombination von mindestens zwei von diesen Resten gebildet wird, steht;
■ m gleich 1 ist;
■ x für eine ganze Zahl oder eine Bruchzahl, welche von 2 bis 4 geht, steht.

6. Verwendung nach einem der Ansprüche 1 bis 5, **dadurch gekennzeichnet, dass** die Inhaltsstoffe (A2) ausgewählt sind aus der Gruppe der Kopplungsmittel, von der jedes Mitglied eine Verbindung ist, die im Wesentlichen aus einem Silan der Formel (II) gebildet wird, in der:
■ b für eine ganze Zahl, die unter 1, 2 und 3 ausgewählt ist, steht;
■ die Symbole G⁵, die gleich oder verschieden sind, in der aus den Methyl-, Ethyl-, Propyl-, Isopropyl-, Cyclohexyl- und Phenylresten gebildeten Gruppe ausgewählt sind;
■ die Symbole G⁶, die gleich oder verschieden sind, in der aus den Hydroxyl-, Methoxy-, Ethoxy-, n-Propoxy-, Isopropoxy-, n-Butoxy-, Methoxymethoxy-, Ethoxyethoxy- und Methoxyethoxyresten gebildeten Gruppe ausgewählt sind;
■ M für eine (C₁-C₈)-Alkylenkette steht;
■ m gleich 1 ist;
■ x für eine ganze Zahl oder eine Bruchzahl, welche von 2 bis 4 geht, steht.

7. Verwendung nach einem der Ansprüche 1 bis 6, **dadurch gekennzeichnet, dass** die Inhaltsstoffe (A2) ausgewählt sind aus der Gruppe der Kopplungsmittel, von der jedes Mitglied eine Verbindung ist, die im Wesentlichen aus einem Silan der Formel (II) gebildet wird, in der:
■ b für eine ganze Zahl, die unter 1, 2 und 3 ausgewählt ist, steht;
■ die Symbole G⁵, die gleich oder verschieden sind, in der aus den Methyl-, Ethyl-, Propyl-, Isopropyl-, Cyclohexyl- und Phenylresten gebildeten Gruppe ausgewählt sind;
■ die Symbole G⁶, die gleich oder verschieden sind, in der aus den Hydroxyl-, Methoxy-, Ethoxy-, n-Propoxy- und Isopropoxyresten gebildeten Gruppe ausgewählt sind;
■ M in der aus den zweiwertigen Methylen-, Ethylen- und Propylenresten gebildeten Gruppe ausgewählt ist;
■ m gleich 1 ist;
■ x für eine ganze Zahl oder eine Bruchzahl, welche von 2 bis 4 geht, steht.

8. Zusammensetzungen von einem oder mehreren Elastomer(en), **dadurch gekennzeichnet, dass** sie umfassen:
(B) mindestens ein isoprenisches Elastomer,
(C) einen verstärkende anorganischen Füllstoff und
(A) eine adäquate Menge des Kopplungssystems, bestehend aus der besonderen Assoziation, die auf der Kombination der Inhaltsstoffe (A1) und (A2), die in einem der Ansprüche 1 bis 7 definiert sind, beruht.

9. Zusammensetzungen nach Anspruch 8, **dadurch gekennzeichnet, dass** sie umfassen (wobei die Teile bezogen auf das Gewicht angegeben sind):
• auf 100 Teile von einem oder mehreren isoprenischen Elastomer(en),
• 10 bis 200 Teile von anorganischem Füllstoff (C),
• eine Menge von Kombinationen (A1) + (A2), die zu jeder Zusammensetzung beiträgt:
- 0,5 bis 15 Teile Inhaltsstoff (A1) und
- 0,5 bis 15 Teile Inhaltsstoff (A2).

10. Zusammensetzungen nach Anspruch 9, **dadurch gekennzeichnet, dass** sie umfassen (wobei die Teile bezogen auf das Gewicht angegeben sind):
• auf 100 Teile von einem oder mehreren isoprenischen Elastomer(en),
• 30 bis 150 Teile von anorganischem Füllstoff (C),
• eine Menge von Kombinationen (A1) + (A2), die zu jeder Zusammensetzung beiträgt:
- 1 bis 10 Teile Inhaltsstoff (A1) und
- 1 bis 10 Teile Inhaltsstoff (A2).

11. Zusammensetzungen nach einem der Ansprüche 8 bis 10, **dadurch gekennzeichnet, dass** das (oder die) isoprenische(n) Elastomer(en) ausgewählt ist bzw. sind unter:
(1) den synthetischen Polyisoprenen, die erhalten werden durch Homopolymerisation von Isopren oder Methyl-2-butadien-1,3;
(2) den synthetischen Polyisoprenen, die erhalten werden durch Copolymerisation von Isopren mit einem oder mehreren ethylenisch ungesättigten Monomeren, die ausgewählt sind unter:
- (2.1) den konjugierten Dien-Monomeren außer Isopren, welche 4 bis 22 Kohlenstoffatome aufweisen;
- (2.2) den aromatischen Vinyl-Monomeren, welche 8 bis 20 Kohlenstoffatome aufweisen;
- (2.3) den vinylischen Nitril-Monomeren, welche 3 bis 12 Kohlenstoffatome aufweisen;
- (2.4) den acrylischen Ester-Monomeren, die von Acrylsäure oder Methacrylsäure mit Alkanolen mit 1 bis 12 Kohlenstoffatomen abgeleitet sind;
- (2.5) einer Mischung von mehreren der vorerwähnten Monomere (2.1) bis (2.4) untereinander; wobei die Polyisopren-Copolymere zwischen 99 und 20 Gew.-% isoprenische Einheiten und zwischen 1 und 80 Gew-.% dienische, vinylaromatische, vinylnitrilische und/oder sich von acrylischen Estern ableitende Einheiten enthalten und beispielsweise aus Poly(isopren-butadien), Poly(isopren-styrol) und Poly(isopren-butadien-styrol) bestehen;
(3) Naturkautschuk;
(4) den Copolymeren, die durch Copolymerisation von Isobuten und Isopren erhalten werden (Butylkautschuk), wie auch die halogenierten, insbesondere chlorierten oder bromierten Versionen von diesen Copolymeren;
(5) einer Mischung von mehreren der vorerwähnten Elastomere (1) bis (4) untereinander;
(6) einer Mischung, welche eine von 51 bis 99,5 Gew.-% gehende Hauptmenge von vorerwähntem Elastomer (1) oder (3) und eine von 49 bis 0,5 Gew.-% gehende geringere Menge von einem oder mehreren dienischen Elastomeren außer isoprenischen Elastomeren enthält.

12. Zusammensetzungen nach Anspruch 11, **dadurch gekennzeichnet, dass** man auf ein oder mehrere isoprenische Elastomere zurückgreift, die ausgewählt sind unter: (1) den synthetischen homopolymeren Polyisoprenen; (2) den synthetischen Polyisopren-Copolymeren, welche aus Poly(isopren-butadien), Poly(isopren-styrol) und Poly(isopren-butadien-styrol) bestehen; (3) Naturkautschuk; (4) Butylkautschuk; (5) einer Mischung der vorerwähnten Elastomere (1) bis (4) untereinander; (6) einer Mischung, welche eine Hauptmenge von vorerwähntem Elastomer (1) oder (3) und eine geringere Menge von dienischem Elastomer außer isoprenischem Elastomer, bestehend aus Polybutadien, Polychloropren, Poly(butadien-styrol), Poly(butadien-acrylnitril) und einem Terpolymer (Ethylen-Propylen-Dien-Monomer, nicht-konjugiert), enthält.

13. Zusammensetzungen nach einem der Ansprüche 8 bis 12, **dadurch gekennzeichnet, dass** der verstärkende anorganische Füllstoff aus Siliciumdioxid, allein genommen oder in einer Mischung mit Aluminiumoxid, besteht.

14. Zusammensetzungen nach Anspruch 13, **dadurch gekennzeichnet, dass**:
■ das Siliciumdioxid ein Kieselhydrogel ist, welches beispielsweise eine spezifische BET-Oberfläche unter oder gleich 450 m²/g aufweist,
■ das Aluminiumoxid ein hochgradig dispergierbares Aluminiumoxid ist, welches beispielsweise eine spezifische BET-Oberfläche, welche von 30 bis 400 m²/g geht, und einen hohen Gehalt an reaktiven Al-OH-Oberflächenfunktionen aufweist.

15. Zusammensetzungen nach einem der Ansprüche 8 bis 14, **dadurch gekennzeichnet, dass** sie außerdem die Gesamtheit oder einen Teil von anderen Bestandteilen oder zusätzlichen Additiven enthalten, welche umfassen:
■ insoweit, als es sich um das Vulkanisationssystem handelt:
- (D1): obligatorisch Vulkanisationsmittel, die aus Schwefel oder Schwefeldonator-Verbindungen ausgewählt sind;
- (D2): fakultativ Vulkanisationsbeschleuniger;
- (D3): fakultativ Vulkanisationsaktivatoren;
■ insoweit, als es sich um ein oder mehrere andere(s) Additiv(e) handelt:
- (D4): fakultativ einen herkömmlichen verstärkenden Füllstoff, der aus Ruß besteht;
- (D5): fakultativ einen herkömmlichen wenig oder nicht verstärkenden weißen Füllstoff;
- (D6): fakultativ Schutzmittel;
- (D7): fakultativ Weichmacher und Anwendungshilfsmittel.

16. Verfahren zur Herstellung der Zusammensetzungen von einem oder mehreren isoprenischen Elastomer(en) nach einem der Ansprüche 8 bis 15, **dadurch gekennzeichnet, dass** es darin besteht, die beiden folgenden Phasen 1 und 2 auszuführen:
• Phase 1: man füllt ein und durchmischt in einen/einem Innenmischer in einem oder mehreren Schritten alle erforderlichen Inhaltsstoffe mit Ausnahme im Allgemeinen des (oder der) Vulkanisationsmittel(s), indem bei einer Temperatur von 40 bis 200°C gearbeitet wird;
• Phase 2: dann wird die so erhaltene Mischung auf einen externen Mischer wieder aufgegeben und man setzt dazu dann das (oder die) Vulkanisationsmittel und gegebenenfalls einen oder mehrere andere(n) Inhaltsstoff(e) zu, indem bei einer niedrigeren Temperatur, unter 120°C, gearbeitet wird.

17. Verfahren nach Anspruch 16, **dadurch gekennzeichnet, dass**:
• das Kopplungsmittel (A2) in seiner Gesamtheit während der Phase 1 zu dem gleichen Zeitpunkt wie der verstärkende anorganische Füllstoff eingespeist wird;
• das Kopplungsmittel (A1):
- entweder in seiner Gesamtheit während der Phase 1 eingespeist wird,
- oder in seiner Gesamtheit während der Phase 2 eingespeist wird,
- oder zwischen den beiden Phasen 1 und 2 aufgeteilt wird, wobei der erste Bruchteil, der in Phase 1 inkorporiert wird, einem Anteil von 10 bis 80 Gew.-% entspricht, wobei der zweite Bruchteil, der in Phase 2 inkorporiert wird, einem Anteil von 90 bis 20 Gew.-% entspricht.

18. Gegenstände aus Elastomer(en), **dadurch gekennzeichnet, dass** sie einen Korpus aufweisen, welcher eine Zusammensetzung nach einem der Ansprüche 8 bis 15 umfasst.

19. Gegenstände nach Anspruch 18, **dadurch gekennzeichnet, dass** sie aus Motorlagern, Schuhsohlen, Seilbahnrollen, Dichtungen von Haushaltsgeräten und Kabelmänteln bestehen.
